# EUROPEAN PATENT APPLICATION

(11) **EP 4 835 547 A1**
(43) Date of publication of application: **04.11.2026**
(21) Application number: 24912683.0
(22) Date of filing: 20.12.2024
(51) Int. Cl.: G02C 7/00, B23K 26/00, G02B 1/115, G02B 5/22, G02B 5/28

(54) **GLASSES LENS, GLASSES, GLASSES LENS MANUFACTURING METHOD, AND OPTICAL MEMBER**

(30) Priority: 28.12.2023 JP 2023223197
(71) Applicant: HOYA LENS THAILAND LTD., Pathumthani 12130 (TH)
(72) Inventor: OOKUBO Shigeki, Tokyo 160-8347 (JP)
(74) Representative: Betten & Resch
(86) International application number: PCT/JP2024/045302
(87) International publication number: WO 2025/142796

(57) **Abstract**

Provided are a spectacle lens and technologies related thereto, the spectacle lens being a spectacle lens that has an object-side surface and an eyeball-side surface, the spectacle lens including: a lens substrate; and an optical interference layer having a laminated structure, the optical interference layer being provided on at least any of surfaces of the lens substrate, in which at least any surface among the surfaces each provided with the optical interference layer of the spectacle lens includes a first region where removed portions from which at least one layer of the optical interference layer has been locally removed are arranged with first regularity, with non-removed portions in which the one layer has not been removed located between the removed portions, and a second region that is a region where the removed portions are arranged with second regularity or a region configured of the non-removed portions, and the first region and the second region are visually recognized as regions having mutually different color tones.

## Description

### Technical Field

In this specification, the contents of Japanese Patent Application No. 2023-223197 are considered to be entirely described. Contents not described in this specification can be referenced from the description in Japanese Patent Application No. 2023-223197.

The present disclosure relates to a spectacle lens, spectacles, a method for producing a spectacle lens, and an optical component.

### Background Art

Spectacles are, as is generally well known, used by a wearer to correct eyesight or to protect their eyes from strong rays of light through spectacle lenses. Therefore, it has been difficult to decorate the spectacle lenses so as not to disturb the field of view of the wearer.

On the other hand, PTL 1 proposes use of a marking machine with a laser beam to mark the spectacle lens by partially removing a part of layers formed on the spectacle lens as a permanent visible marking of an optical product, typically a spectacle lens, coated with a multilayer interference coating.

### Citation List

### Patent Literature

[PTL 1] Japanese Translation of PCT Application No. 2019-523447

### Summary of Invention

### Technical Problem

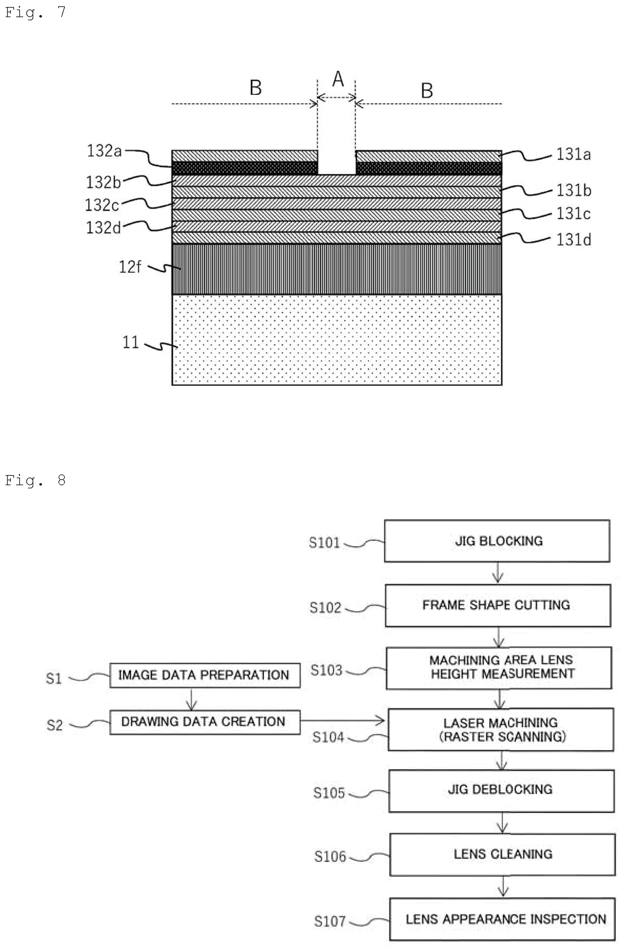

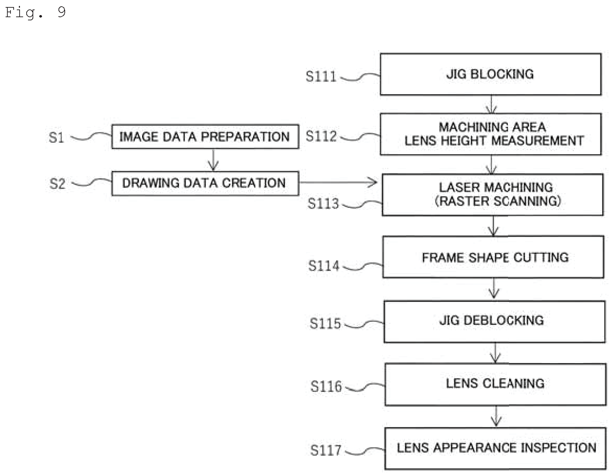

In accordance with Figs. 8 and 9 of the above-mentioned PTL 1, there is obtained an optical product which includes a marking pattern in which an interference coating is locally lacked by a laser in accordance with the shape of a predetermined letter. In other words, a spectacle lens disclosed in PTL 1 is composed of two kinds of portions, that is, a portion where the interference coating is locally removed and a portion where the interference coating is not removed (a portion where the interference coating remains intact). This means that there are only two color tones observed when a third person (a person other than the wearer, or a viewer) sees the spectacle lens worn by the wearer from the object side.

One of objects in an embodiment of the present invention is to increase variations in color tone of a spectacle lens by adopting local removal of a part of an optical interference layer, as compared with the conventional spectacle lens.

From another point of view, one of objects is to enable not only technical or commercial markings but also a decoration of a desired design such as letters, symbols, illustrations, or the like to be provided to a spectacle lens, and to provide a spectacle lens, spectacles, and a method for producing a spectacle lens with decoration of a higher degree of freedom and with richer expression.

### [Solution to Problem]

By locally removing at least a part of thin films constituting a laminate structure from an optical interference layer having the laminate formed on a surface of a spectacle lens, it is possible to change reflection characteristics of light generated in the removed part with respect to a non-removed part.

Here, in this removal, removed portions A from which at least one layer of the optical interference layer has been locally removed are regularly (preferably repeatedly) arranged, and non-removed portions B from which the one layer has not been removed are caused to be present between the removed portions. The inventor has found that it is thus possible to realize a color tone γ which is different from both a color tone α in a region including only the removed portions A where the optical interference layer has been locally removed and a color tone β in a region including only the non-removed portions B where the optical interference layer is maintained intact.

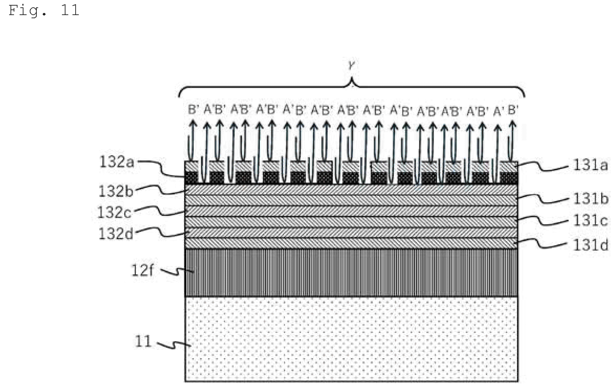

Fig. 11 is a schematic sectional view of a spectacle lens illustrating how the color tone γ, instead of the color tone α and the color tone β, is visually recognized when an observer observes the spectacle lens in a worn state.

In a case where the removed portions A and the non-removed portions B are regularly and alternately arranged so as to be adjacent to each other as illustrated in Fig. 11, reflected light A' from the removed portions A and reflected light B' from the non-removed portions B are mixed and incident on pupils of the observer. As a result, the color tone γ, which is a mixed color (for example, light blue) of a color of light (for example, a metal color close to gold, the color tone α) brought about by the reflected light A' of the removed portions A and a color of light (for example, blue, the color tone β) brought about by the reflected light B' of the non-removed portions B, is visually recognized by the observer. On the basis of this knowledge, the following solutions have been discovered for the above-mentioned problem.

A first aspect is
a spectacle lens that has an object-side surface and an eyeball-side surface, the spectacle lens including:
a lens substrate; and
an optical interference layer having a laminated structure, the optical interference layer being provided on at least any surface of the lens substrate,
in which
at least any one of surfaces of the spectacle lens on which the optical interference layer is provided includes
a first region where removed portions from which at least one layer of the optical interference layer has been locally removed are arranged with first regularity, with non-removed portions in which the layer has not been removed located between the removed portions, and
a second region that is a region where the removed portions are arranged with second regularity or a region configured of the non-removed portions, and
the first region and the second region are visually recognized as regions having mutually different color tones.

A second aspect is the spectacle lens according to the first aspect, in which
the color tones include at least any of brightness/darkness of colors, color densities, brightness/darkness according to a difference in amount of reflected light, and intensity of how to shine generated in the regions.

A third aspect is the spectacle lens according to the first or second aspect, in which
there is a single color tone in the first region, and
there is a single color tone in the second region.

A fourth aspect is the spectacle lens according to any of the first to third aspects, in which
the optical interference layer having the laminated structure is an antireflection film having a multilayer structure in which low refractive index layers and high refractive index layers are laminated, and
the removed portions are obtained by partially removing the low refractive index layer that is an outermost layer of the multilayer structure.

A fifth aspect is the spectacle lens according to any of the first to fourth aspects including:
the first region; and
a second region in which the removed portions are arranged with second regularity,
in which
arrangement modes of the removed portions differ between the first region and the second region.

A sixth aspect is
the spectacle lens according to any of the first to fifth aspects, in which the first regularity is a mode in which the removed portions are repeatedly arranged in at least one direction.

A seventh aspect is
the spectacle lens according to any of the first to sixth aspects, in which in a plan view of the spectacle lens, a minimum unit of repetition of the removed portions in the first region is one dot-like removed portion, and in 80% or more in the number of dots in the first region, a value of (a minimum width + a maximum width)/2 in each dot-like removed portion is within a variation width of 20% in the first region.

An eighth aspect is
the spectacle lens according to any of the first to seventh aspects, in which in a plan view of the spectacle lens, a minimum unit of repetition of the removed portions in the first region is a plurality of interconnected dot-like removed portions.

A ninth aspect is
the spectacle lens according to any of the first to eighth aspects, in which the non-removed portions in the first region surround each of the removed portions or are surrounded by the removed portions, or a combination thereof is adopted.

A tenth aspect is the spectacle lens according to any of the first to ninth aspects, in which
when directions perpendicular to each other in a plan view of the spectacle lens are defined as an X direction and a Y direction, and a combination of straight lines arranged at equal intervals in the X direction and straight lines arranged at equal intervals in the Y direction is defined as an XY lattice,
a common XY lattice is employed in the first region and the second region, and each of the removed portions in the first region and each of the removed portions in the second region include only one intersection of the XY lattice.

An eleventh aspect is the spectacle lens according to any of the first to tenth aspects, in which
in a plan view of the spectacle lens,
the removed portions in the first region are obtained by thinning out removed portions in a virtual state where the removed portions are formed at all intersections of the XY lattice according to first thinning regularity, and
the removed portions in the second region are obtained by thinning out removed portions in a virtual state where the removed portions are formed at all intersections of the XY lattice according to second thinning regularity which is different from the first thinning regularity.

A twelfth aspect is the spectacle lens according to any of the first to eleventh aspects, in which
the first regularity includes a rule of a distance between centers of the removed portions in one direction G in the first region, and
the second regularity includes a rule of a distance between centers of the removed portions in the one direction G in the second region.

A thirteenth aspect is the spectacle lens according to any of the first to twelfth aspects, in which
in a plan view of the spectacle lens, all distances between the centers of adjacent removed portions in one direction H in the first region are T times distances between the centers of adjacent removed portions in the direction H in the second region, and $0.9 * m / n \leq T \leq 1.1 * m / n$ (where m and n are natural numbers) .

A fourteenth aspect is
the spectacle lens according to any of the first to thirteenth aspects, in which the second region includes only the removed portions.

A fifteenth aspect is the spectacle lens according to any of the first to fourteenth aspects, in which
luminous transmittances of both the first region and the second region are equal to or greater than 80%.

A sixteenth aspect is the spectacle lens according to any of the first to fifteenth aspects, in which
a maximum width of the removed portions is equal to or less than 200 µm.

A seventeenth aspect is spectacles including:
a spectacle frame; and spectacle lenses after lens shaping each having an object-side surface and an eyeball-side surface;
in which each of the spectacle lenses is the spectacle lens according to any one of the first to sixteenth aspects.

An eighteenth aspect is
a method for producing a spectacle lens including an object-side surface and an eyeball-side surface, the method including:
forming, on at least any of surfaces provided with an optical interference layer in the spectacle lens including a lens substrate and the optical interference layer provided on at least any of surfaces of the lens substrate and having a laminated structure,
a first region where removed portions obtained by locally removing at least one layer of the optical interference layer through laser irradiation are arranged with first regularity with non-removed portions in which the one layer has not been removed located between the removed portions, and
a second region that is a region where the removed portions are arranged with second regularity through laser irradiation or a region configured of the non-removed portions,
such that
the first region and the second region are visually recognized as regions having mutually different color tones.

A nineteenth aspect of the present invention is the method for producing a spectacle lens according to the eighteenth aspect, including:
generating, from image data of a desired decorative design, drawing data including a portion scheduled to be irradiated with laser on the surface provided with the optical interference layer; and
irradiating the optical interference layer with laser while performing laser beam scanning by a laser irradiation device by using the drawing data to form the removed portions,
in which
the optical interference layer having the laminated structure is an antireflection film having a multilayer structure in which low refractive index layers and high refractive index layers are laminated, and
the removed portions are obtained by partially removing the low refractive index layer that is an outermost layer of the multilayer structure.

A twentieth aspect is the method for producing a spectacle lens according to the eighteenth or nineteenth aspect, including:
forming the first region and
a second region where the removed portions are arranged with second regularity through laser irradiation,
in which
arrangement modes of the removed portions differ between the first region and the second region.

A twenty-first aspect is the method for producing a spectacle lens according to any of the eighteenth to twentieth aspects, in which
when directions perpendicular to each other are defined as an X direction and a Y direction, and a combination of straight lines arranged at equal intervals s in the X direction and straight lines arranged at equal intervals t in the Y direction is defined as an XY lattice,
the drawing data is data including at least XY coordinates, and
on the basis of a relationship of a degree of damage on lower layer than the high refractive index layers to a total light amount of laser irradiation,
a minimum center-to-center distance x0 between center positions of laser irradiation, which indicates a degree of overlapping of laser irradiation portions in the X direction, is set so as to suppress occurrence of the damage, and the minimum center-to-center distance x0 is set to the equal interval s,
a minimum center-to-center distance y0 between center positions of the laser irradiation, which indicates a degree of overlapping of laser irradiation portions in the Y direction, is set so as to suppress occurrence of the damage, and the minimum center-to-center distance y0 is set to the equal interval t,
a common XY lattice is employed for the first region and the second region, and
each of the laser irradiation portions in the first region and each of the laser irradiation portions in the second region are set to include only one intersection of the XY lattice.

A twenty-second aspect is the method for producing a spectacle lens according to any of the eighteenth to twenty-first aspects, in which
on the basis of a relationship of the degree of damage on the lower layers than the high refractive index layers to the total light amount of the laser irradiation and
a size of one side of one pixel of the image data,
a number of intersections of the XY lattice arranged in a part corresponding to one pixel of the image data is set in the drawing data.

A twenty-third aspect is the method for producing a spectacle lens according to any of the eighteenth to twenty-second aspects, in which
laser irradiation portions in the first region are arranged in a mode in which the irradiation portions in a virtual state where all intersections of the XY lattice are irradiated with laser are thinned out according to first thinning regularity, and
the laser irradiation portions in the second region are arranged in a mode in which the laser irradiation portions in the virtual state where all the intersections of the XY lattice are irradiated with laser are thinned out according to second thinning regularity which is different from the first thinning regularity.

A twenty-fourth aspect is
the method for producing a spectacle lens according to any of the eighteenth to twenty-third aspects, in which a variation width of a value of (a minimum width + a maximum width)/2 at each of the laser irradiation portions in the first region and the second region is within 20%.

A twenty-fifth aspect is
the method for producing a spectacle lens according to any of the eighteenth to twenty-fourth aspects, in which the drawing data causes one machining spot of laser irradiation to correspond to one pixel of the image data.

A twenty-sixth aspect is
the method for producing a spectacle lens according to any of the eighteenth to twenty-fifth aspects, in which the drawing data causes a plurality of machining spots of laser irradiation to correspond to one pixel of the image data.

A twenty-seventh aspect is
the method for producing a spectacle lens according to any of the eighteenth to twenty-sixth aspects, in which the drawing data causes a plurality of machining spots of laser irradiation to correspond to one pixel of the image data in a mutually partially overlapping manner.

A twenty-eighth aspect is
the method for producing a spectacle lens according to any of the eighteenth to twenty-seventh aspects, in which the laser is an ultrashort pulsed laser having a pulse width of equal to or greater than 10 femtoseconds to less than 100 picoseconds.

A twenty-ninth aspect is
an optical component including:
a substrate; and
an optical interference layer provided on a surface of the substrate and having a laminated structure,
in which
the surface of the optical component provided with the optical interference layer includes
a first region where removed portions from which at least one layer of the optical interference layer has been locally removed are arranged with first regularity, with non-removed portions in which the layer has not been removed located between the removed portions, and
a second region that is a region where the removed portions are arranged with second regularity or a region configured of the non-removed portions, and
the first region and the second region are visually recognized as regions having mutually different color tones.

Another embodiment of the present disclosure relates to
a spectacle lens that has an object-side surface and an eyeball-side surface, the spectacle lens including:
a lens substrate; and
an optical interference layer having a laminated structure on any of surfaces of the lens substrate,
in which a decorative portion that is formed by locally removing at least one layer of the optical interference layer and is visually recognizable is included,
the decorative portion includes a plurality of regions having mutually different removed area percentages of the removed optical interference layer in plan view,
the plurality of regions include a first region having a removal pattern obtained by aligning removed portions with first regularity with each of removed portions with dimensions equal to or less than 200 µm defined as a minimum unit, and
the plurality of regions are visually recognized as regions having mutually different color tones.

In the above embodiment, the color tones preferably include brightness/darkness of colors, color densities, brightness/darkness according to a difference in amount of reflected light, and intensity of how to shine generated in the regions.

In the above embodiment, the removed portions preferably have a difference in reflectance in a visible light region from that of the non-removed portions of the optical interference layer.

In the above embodiment, the plurality of regions preferably include a second region that is different from the first region, and a removed area percentage in the second region is 100%.

In the above embodiment, luminous transmittance of the decorative portion is preferably equal to or greater than 80%.

In the above embodiment, the removed optical interference layer preferably includes a low refractive layer formed as an outermost layer of the laminated structure.

An embodiment of the present disclosure relates to spectacle including: a spectacle frame; and a spectacle lenses after lens shaping each having an object-side surface and an eyeball-side surface, in which each of the spectacle lenses is the spectacle lens according to the above embodiment.

One embodiment of the present disclosure relates to a method for producing a spectacle lens including
forming a decorative portion by working a spectacle lens having a lens substrate and an optical interference layer formed on the lens substrate and having a laminated structure, the method including:
creating drawing data on the basis of image data of a desired decorative design; and
irradiating the optical interference layer with laser while performing laser beam scanning by a laser irradiation device by using the drawing data to form the decorative portion,
in which
in the irradiating with the laser, at least one layer of the optical interference layer is locally removed to form a plurality of regions having different removed area percentages of the removed optical interference layer in plan view,
the plurality of regions include a first region having a removal pattern obtained by aligning removed portions with first regularity with each of removed portions with dimensions of equal to or less than 200 µm defined as a minimum unit, and
the plurality of regions are visually recognized as regions having mutually different color tones.

In the above embodiment, the creating of the drawing data preferably includes determining a correspondence between a pixel size of the image data and the machining spot size in irradiation with pulsed laser of one pulse.

In the above embodiment, the image data is preferably binary data, the drawing data preferably includes a removal pattern with a pixel size of the image data defined as a minimum unit, and the pixel size is preferably within a range of 1 µm to 100 µm.

In the above embodiment, pitches of machining spots in irradiation with pulsed laser of one pulse in both the X direction and the Y direction are preferably within a range of 1 µm to 100 µm in the drawing data.

In the above embodiment, the plurality of regions preferably include a second region in which the removed area percentage is 100% by aligning the removed portions without gaps.

In the above embodiment, the drawing data may cause one machining spot by laser irradiation to correspond to one pixel of the image data.

In the above embodiment, the drawing data may cause a plurality of machining spots by laser irradiation to correspond to one pixel of the image data.

In the above embodiment, the drawing data may cause a plurality of machining spots by laser irradiation to correspond to one pixel of the image data in a mutually partially overlapping manner.

In the above embodiment, the laser beam is preferably an ultrashort pulsed laser having a pulse width of equal to or greater than 10 femtoseconds and less than 100 picoseconds.

In the above embodiment, the optical interference layer preferably includes a reaction layer that is more reactive relative to the other layers included in the laminated structure in response to the laser beam irradiation, and the reaction layer is preferably at least partially removed by the irradiation.

Another embodiment of the present disclosure relates to
an optical component including:
a substrate; and
an optical interference layer formed on a surface of the substrate and having a laminated structure,
in which a decorative portion that is formed by locally removing at least one layer of the optical interference layer and is visually recognizable is included,
the decorative portion includes a plurality of regions having mutually different removed area percentages of the removed optical interference layer in plan view,
the plurality of regions include a first region having a removal pattern obtained by aligning removed portions with first regularity with each of removed portions with dimensions equal to or less than 200 µm defined as a minimum unit, and
the plurality of regions are visually recognized as regions having mutually different color tones.

The technical idea of the present invention is also reflected to spectacles in which the vicinity of the peripheral edge of the above spectacle lens is cut on the basis of a predetermined frame shape and the spectacle lens is fitted into the spectacle frame.

The embodiments described hitherto can be arbitrarily combined with each other.

### Advantageous Effects of Invention

According to one embodiment of the present disclosure, it is possible to increase variations in color tone of a spectacle lens employing partial removal of a part of an optical interference layer as compared with the conventional spectacle lens.

From another point of view, it is possible to provide a spectacle lens, spectacles, a method for producing a spectacle lens, and the like that enable a high degree of freedom in decorating a desired design of the spectacle lens.

### Brief Description of Drawings

[Fig. 1]

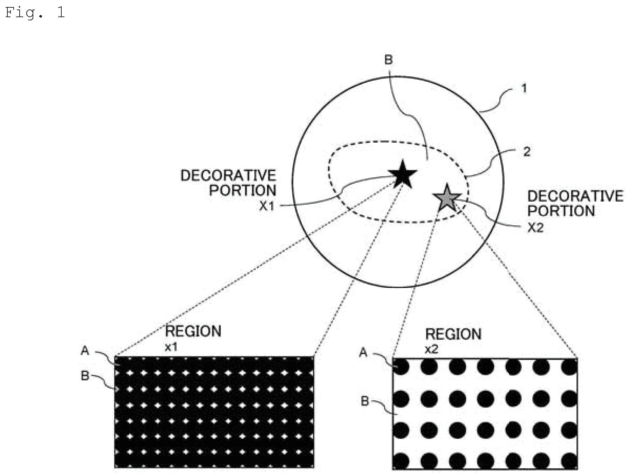

   Fig. 1 is a schematic front view of a spectacle lens according to a present embodiment.
[Fig. 2]

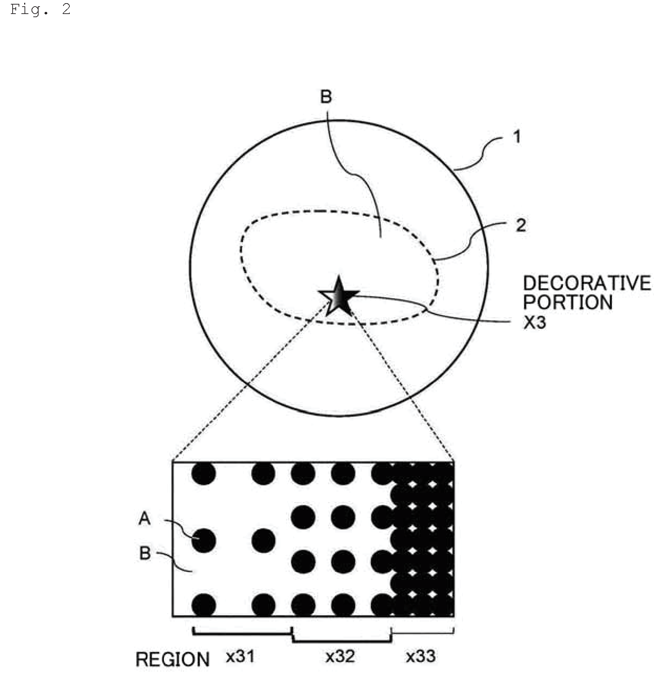

   Fig. 2 is a schematic front view of another aspect of the spectacle lens according to the present embodiment.
[Fig. 3]

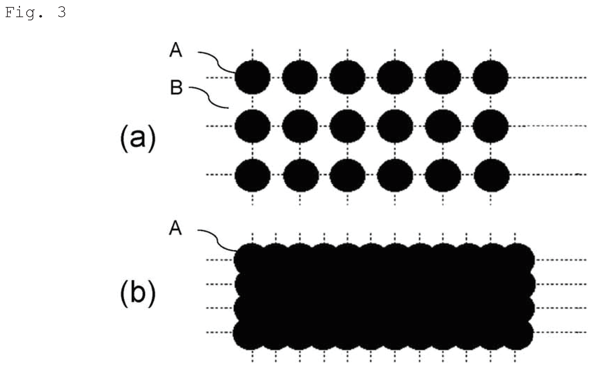

   Fig. 3 is an overview diagram of a removal pattern of a region formed by dots in the spectacle lens according to the present embodiment.
[Fig. 4]

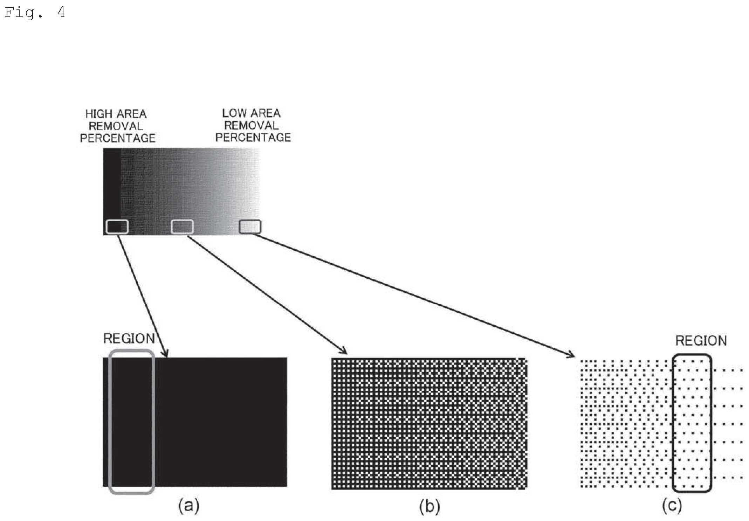

   Fig. 4 is a removal pattern sample of the region formed by the dots in the spectacle lens according to the present embodiment.
[Fig. 5]

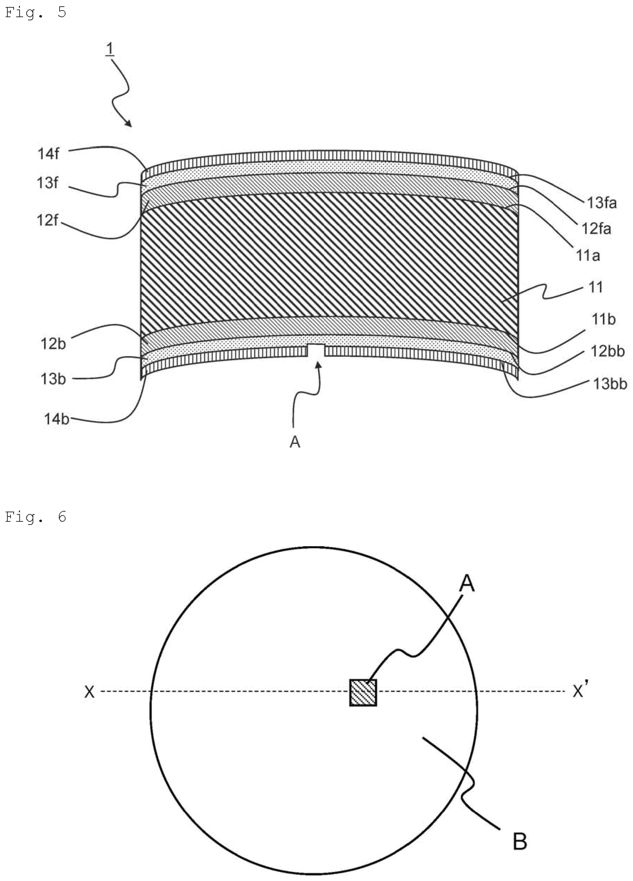

   Fig. 5 is a schematic sectional view of the spectacle lens according to the present embodiment.
[Fig. 6]
   Fig. 6 is a schematic front view of a spectacle lens according to a present embodiment.
[Fig. 7]
   Fig. 7 is a schematic sectional view of the spectacle lens according to the present embodiment.
[Fig. 8]
   Fig. 8 is a flow diagram illustrating an example of a procedure of a method for producing the spectacle lens according to the present embodiment.
[Fig. 9]
   Fig. 9 is a flow diagram illustrating an example of a procedure of a method for producing the spectacle lens according to the present embodiment.
[Fig. 10]

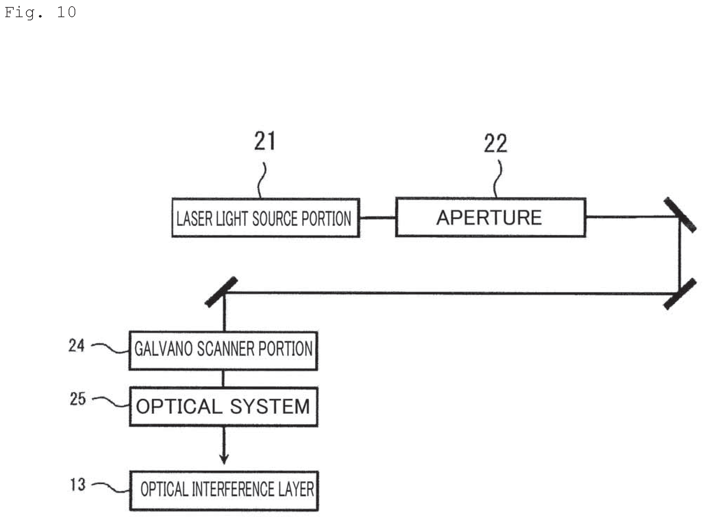

   Fig. 10 is an explanatory diagram illustrating an overview configuration example of a laser processing device used in the method for producing the spectacle lens according to the present embodiment.
[Fig. 11]
   Fig. 11 is an overview sectional view of the spectacle lens according to the embodiment, which illustrates how a color tone γ, instead of a color tone α and a color tone β, is visually recognized when a viewer sees the spectacle lens in a worn state.
[Fig. 12]

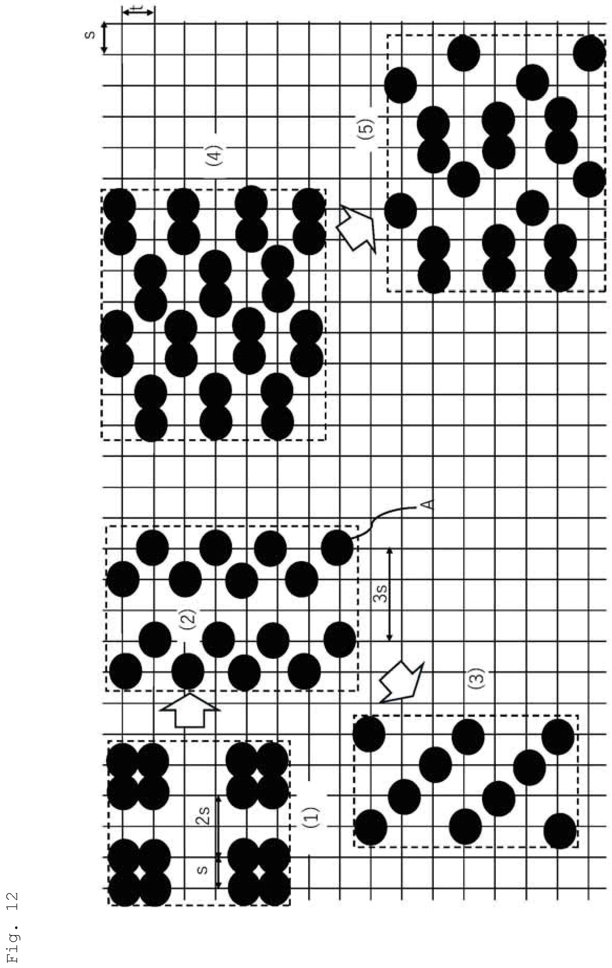

   Fig. 12 is an overview diagram of the spectacle lens according to the embodiment when one surface of the spectacle lens is seen in plan view, in which removed portions arranged with various kinds of regularity are illustrated, the dashed lines indicate a region unit, and the XY lattice is composed of virtual lines. The white arrows indicate that the removed portions have been arranged by changing the regularity from the regions at the roots of the white arrows to the regions at the tips of the arrows. This drawing illustrates an example in which all the regions are formed on the surface, and each of the removed portions also includes only one intersection of the XY lattice.
[Fig. 13]

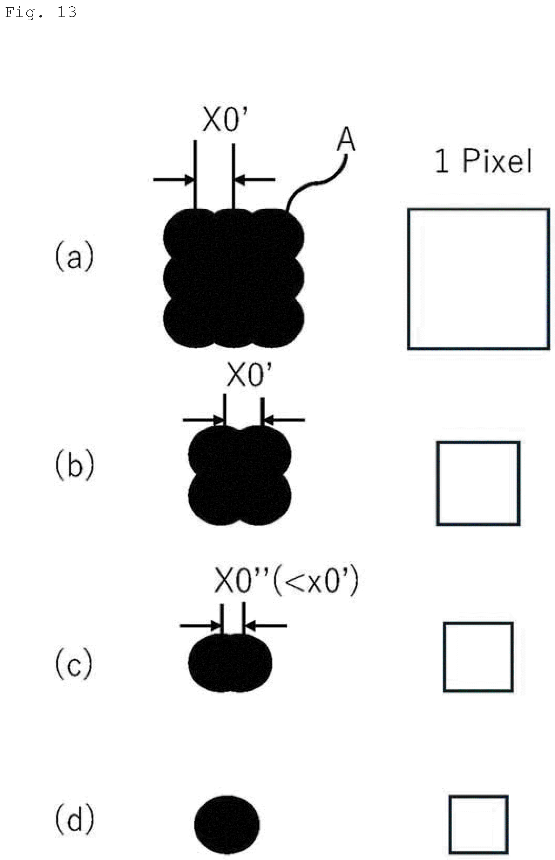

   Fig. 13 is an explanatory diagram illustrating a correspondence of machining spots by laser irradiation to one pixel of image data in the spectacle lens according to the embodiment.
   (a) is a diagram illustrating a state where a 3 × 3 removed portions coupled to each other (the distance between the centers of adjacent removed portions is x0' in both an X and a Y directions) in the XY lattice are set for one pixel.
   (b) is a diagram illustrating a state where 2 × 2 removed portions coupled to each other (the distance between the centers of adjacent removed portions is x0' in both the X direction and the Y direction) in the XY lattice are set for one pixel.
   (c) is a diagram illustrating a state where a 2 × 1 removed portions coupled to each other (the distance between the centers of adjacent removed portions is x0", which is smaller than x0') in the XY lattice are set for one pixel.
   (d) is a diagram illustrating a state where one removed portion is set for one pixel.
[Fig. 14]

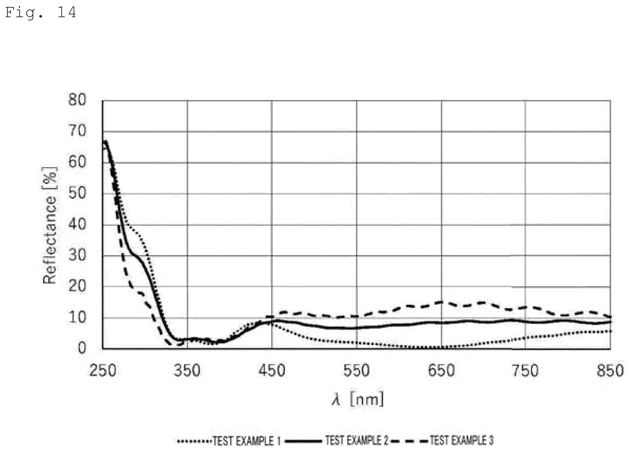

   Fig. 14 illustrates plot of average reflectances in test examples 1 to 3.

### Description of Embodiments

Hereinafter, embodiments according to the present disclosure will be described in detail with reference to the drawings as necessary, but the present disclosure is not limited thereto, and can be variously modified without departing from the scope and spirit thereof. Here, in the drawings, the same components are denoted with the same reference numerals and redundant descriptions are omitted. In addition, positional relationships such as above, below, left and right are based on the positional relationships illustrated in the drawings unless otherwise particularly specified. Furthermore, dimensional ratios in the drawings are not limited to the illustrated ratios.

Note that in this specification, the expression of a numerical value range of "1 to 100", for example, includes both the lower limit value "1" and the upper limit value "100". In addition, the same applies to the expression of other numerical value ranges.

The term "lens" as used in this specification includes a spectacle lens. The "spectacle lens" is a transparent body which has an object-side surface and an eyeball-side surface and has a predetermined power (spherical power, astigmatism power, or the like) based on a prescription for a wearer (spectacle user). Usually, the spectacle lens has a spherical surface, an aspherical surface, or a progressive surface as a surface shape. The lens includes lenses having polarization, dimming, and a wavelength filtering function of cutting a predetermined wavelength in addition to those of spectacles for the purpose of correcting a user's abnormal refraction. In the specification of the present application, the lens also indicates an uncut lens before lens shaping or a lens after the lens shaping (a lens after machining).

In the present specification, the side of the optical center of the spectacle lens will be referred to as an inner side, and the outermost edge side of the spectacle lens will be referred to as an outer side. The present specification illustrates an example in which the optical center is aligned with the geometric center and the centering center.

Hereinafter, the optical center will also be referred to as a lens center.

Note that in a case where the spectacle lens is placed on a table, the object-side surface or the eyeball-side surface is positioned on the top side in the top-bottom direction. Therefore, when discussing the configuration of each surface of the spectacle lens, it is assumed that the spectacle lens is seen in plan view.

In this specification, the left-right direction in a state where the spectacle lens is placed on a table is defined as an X direction, the up-down direction is defined as a Y direction, and the direction corresponding to the thickness direction of the spectacle lens and perpendicular to the X direction and the Y direction is defined as a Z direction. The Z direction also corresponds to the direction of an optical axis of the spectacle lens. The lens origin as an origin of the spectacle lens is set to the lens center.

In a case where the wearer is seen (in other words, the wearer is seen from an observer), the right side is defined as a +X direction, the left side is defined as a -X direction, the upper side is defined as a +Y direction, the lower side is defined as a -Y direction, the object-side direction is defined as a +Z direction, and the direction opposite thereto (depth-side direction) is defined as a -Z direction. The front-side direction and the depth-side direction are related to a light flux passing through the center of a pupil and are defined as mentioned above in this specification for convenience of explanation although XY coordinates are needed to be taken into consideration in a strict sense for a peripheral view. In this specification, the "plan view" refers to a state when viewed from the +Z direction to the -Z direction.

### [Spectacle Lens]

An aspect of the present embodiment is a spectacle lens including an object-side surface and an eyeball-side surface, the spectacle lens including:
a lens substrate; and
an optical interference layer having a laminated structure, the optical interference layer being provided on at least any surface of the lens substrate,
in which
at least any one of surfaces of the spectacle lens on which the optical interference layer is provided includes
a first region where removed portions from which at least one layer of the optical interference layer has been locally removed are arranged with first regularity, with non-removed portions in which the layer has not been removed located between the removed portions, and
a second region that is a region where the removed portions are arranged with second regularity or a region configured of the non-removed portions, and
the first region and the second region are visually recognized as regions having mutually different color tones.

According to one embodiment of the present disclosure, it is possible to increase variations in color tone of a spectacle lens employing partial removal of a part of an optical interference layer as compared with the conventional spectacle lens.

From another point of view, it is possible to provide a spectacle lens, spectacles, a method for producing a spectacle lens, and the like that enable a high degree of freedom in decorating a desired design of the spectacle lens.

### <Overview Concerning Configuration of Spectacle Lens>

Fig. 1 is a schematic front view of a spectacle lens according to the present embodiment. Also, Fig. 2 is a schematic front view of the spectacle lens according to another embodiment.

A spectacle lens 1 according to the present embodiment has a decorative portion which includes a plurality of areas as described above and is visually recognizable at least from the object-side surface. In Fig. 1, the decorative portion includes a decorative portion X1 and a decorative portion X2, and in Fig. 2, the decorative portion includes a decorative portion X3.

In this specification, the "decorative portion" is a part including removed portions obtained by locally removing at least one layer of an optical interference layer, and at least a first region corresponds thereto. In a case where a second region is a region in which the removed portions are arranged with second regularity, the second region also corresponds to the decorative portion.

The spectacle lens according to the present embodiment has an object-side surface and an eyeball-side surface.

The "object-side surface" refers to a surface that is located on the object side when spectacles that include the spectacle lenses are worn by a wearer.

The "eyeball-side surface" refers to a surface on the opposite side, that is, the surface that is located on the eyeball side when the spectacles that include the spectacle lenses are worn by the wearer.

Generally, the object-side surface is a convex surface and the eyeball-side surface is a concave surface, that is, each spectacle lens is a meniscus lens.

The same applies to both an uncut lens before lens shaping and a spectacle lens after lens shaping (a lens after machining) of cutting a peripheral edge in accordance with the shape of the spectacle frame.

The content described in this paragraph also applies to a lens substrate (the lens body before a hard coat film or an anti-reflection film is formed) which serves as a basis of the spectacle lens. In other words, the lens substrate also has the object-side surface and the eyeball-side surface.

A known optical interference layer having a laminated structure may be employed. A specific example thereof will be described later. Although it is only necessary for the optical interference layer to be provided on a surface of the spectacle lens provided with removed portions, it is a matter of course that the optical interference layers may be provided on both surfaces of the spectacle lens.

The decorative portion may be formed on either side of the spectacle lens. Furthermore, although the decorative portion can be recognized from the object-side surface, the decorative portion is preferably recognizable from the eyeball-side surface as well. The "visually recognizable" here means that light that has been incident on the decorative portion (sunlight, illumination light, or the like) is visually recognized by being reflected by the decorative portion and then entering pupils of a third person (a person other than the wearer). In order for the decorative portion to be clearly visually recognizable, it is preferable that the decorative portion have a predetermined high reflectance and be a smooth surface such as a mirror surface capable of regularly reflecting the incident light. This point will be further described below. This specification exemplifies a case where optical interference layers are provided on both surfaces of the spectacle lens and the removed portions are provided only on the eyeball-side surface.

In the removed portions, the term "at least one layer" means any single layer or a plurality of layers in the laminated structure. The state where at least one layer is removed means that one layer or a plurality of layers on the outer layer side in the laminated structure are removed. The term "local" means the area of a part of the lens surface.

Also, the spectacle lens 1 according to the present embodiment has removed portions A where at least one layer of the laminated structure of the optical interference layer has been removed and non-removed portions B which do not correspond to the removed portions A. As illustrated in the enlarged views of the decorative portion X1 and the decorative portion X2 in the lower part of Fig. 1, each of a region x1 corresponding to the decorative portion X1 and a region x2 corresponding to the decorative portion X2 has the removed portions A where at least one layer of the laminated structure of the optical interference layer has been removed and the non-removed portions B where no layers have been removed. Also, as illustrated in the enlarged view of the decorative portion X3 in the lower part of Fig. 2, each of regions x31, x32, and x33 constituting the decorative portion X3 includes the removed portions A where at least one layer of the laminated structure of the optical interference layers has been removed and the non-removed portions B where no layers have been removed.

Since at least one layer of the laminated structure of the optical interference layer has been removed in the removed portions A as compared with the non-removed portions B, optical characteristics of the removed portions A and the non-removed portions B are different from each other. The difference in the optical characteristics between the removed portions A and the non-removed portions B causes a difference in appearances of the spectacle lens in a worn state at the removed portions A and the non-removed portions B when seen by a third person from the object-side surface. In the spectacle lens 1 according to the present embodiment, the decorative portion is formed by utilizing the fact that the appearances of the removed portions A and the non-removed portions B when seen by a third person differ. In other words, the removed portions A where at least a part of low refractive index layers or high refractive index layers of the optical interference layer is not present are formed on the spectacle lens having the optical interference layer with the laminated structure in which the low refractive index layers and the high refractive index layers are laminated, thereby forming the decorative portion composed of desired letters, symbols, illustrations, or the like on the surface of the spectacle lens.

In the spectacle lens, at least any of the surfaces each provided with the optical interference layer (for example, the eyeball-side surface; the same applies to the following description) has a first region and a second region. The first region and the second region will also be collectively referred to as a "plurality of regions". The plurality of regions may include a third region, a fourth region, a fifth region ... described below as modification examples, which are regions equivalent to the first region or the second region.

The first region is a region where the removed portions obtained by locally removing at least one layer of the optical interference layers are arranged with first regularity with the non-removed portions where no layer has been removed located between the removed portions.

"Regularity" in this specification refers to the arrangement of the removed portions according to a certain rule in at least one predetermined direction (for example, the X direction and/or the Y direction) as illustrated in Figs. 1 to 4, and 12. As this rule, repeated arrangement of the removed portions at a constant cycle in the aforementioned one direction is illustrated by way of example. When intersections of the XY lattice are named as intersections 1, 2, 3, and 4 when the XY lattice of Fig. 12 is seen in the X direction, for example, it is possible to exemplify a rule of arranging a removed portion at the intersection 1, arranging no removed portion at the intersection 2, arranging the removed portion at the intersection 3, and arranging no removed portions at the intersection point 4. It is a matter of course that a rule of arranging the removed portion at the intersection 1, arranging the removed portion at the intersection 2, arranging no removed portions at the intersection 3, and arranging no removed portions at the intersection point 4 may be adopted.

The term "repeat" means "repeat" in a broad sense. For example, the above term "repeat" can also include a case where the distances between the centers of mutually adjacent removed portions are not exactly the same while the removed portions are arranged in a similar pattern in one direction with the non-removed portions located therebetween.

The "removed portions" in this specification will also be referred to as "dots" in this specification, and will also be referred to as "spots" at the time of laser irradiation. This indicates a portion having the same shape as that of one machining spot per one pulse. The removed portions overlapping in plan view will also be referred to as connected bodies.

The "distance between the centers of the removed portions" refers to the distance between centers of gravity of dots in mutually adjacent removed portions (dots, spots) with the centers of gravity in plan view defined as the centers. The distance between the centers will also be referred to as a "pitch" in this specification. In a case where the shape of the removed portions in plan view is a circle or an ellipse, the "distance between the centers of the removed portions" means the distance between the centers as the name suggests.

The first regularity preferably includes a rule on the distance between the centers of the removed portions in one direction G in the first region.

The second regularity preferably includes a rule on the distance between the centers of the removed portions in the one direction G in the second region.

It is preferable that both rules be different from each other. On the other hand, there may be a case where the distances between the centers of the mutually adjacent removed portions do not strictly coincide with each other as described above while the removed portions are arranged in a similar pattern in one direction with the removed portions arranged in a different pattern in another direction instead. For example, the region (2) and the region (3) of Fig. 12, which will be described later, have a similar pattern in the X direction but different patterns in the Y direction. Therefore, the present embodiment is not limited to the configuration in which the first regularity and the second regularity are mutually different regularity in one predetermined direction.

In any of the cases, the first region and the second region are visually recognized as regions having different color tones as long as the first regularity and the second regularity differ from each other in any sense regardless of the rule on the distance between the centers.

There are mainly two cases of "the non-removed portions being present between the removed portions".

In one of the cases, the removed portions A surround the non-removed portions B as in the region x1 in Fig. 1. In this case, when the region x1 is recognized as a sea-island structure, the non-removed portions B are islands, and the removed portions A are sea.

In the other case, the non-removed portions B surround the removed portions A as illustrated in the region x2 in Fig. 1. In this case, when the region x1 is recognized as a sea-island structure, the removed portions A are islands, and the non-removed portions B are sea.

The two cases are collectively referred to by the expression "with the non-removed portions located between the removed portions" in this specification.

The second region is any one of the following regions:
(1) a region where the removed portions are arranged with second regularity; and
(2) a region configured of non-removed portions.
   (1) means that the second region includes the removed portions. The second regularity at that time is not limited as long as it is different from the first regularity at any point (for example, the distance between the centers, the arrangement patterns of the removed portions, or the like). Otherwise, the description of the first regularity above can be used. In this specification, the arrangement pattern of the removed portions will also be referred to as a removal pattern or simply as a pattern.
      (1) is not limited to a case where the non-removed portions are present between the removed portions. In other words, the entire second region may be a removed portion without leaving the non-removed portions. This entirely removed portion will also be referred to as a "solid pattern" in this specification.
      (2) means that the second region does not include the removed portions. In the case of (2), when the observer visually recognizes spectacle lens, the color tone γ of the mixed color (for example, light blue) described in the section of "Means for Solving the Problems of the Present Invention" and the color (for example, blue in the case of a blue-cut lens, the color tone β) of the light brought by the reflected light B' from the non-removed portions B are visually recognized. Even if the color (for example, a metal color close to gold, the color tone α) of the light brought by the reflected light A' from the removed portions A is not visually recognized by the observer, the color tone β and color tone γ are visually recognized by the observer.

It is not known before the present application that the color tone γ is exhibited in a spectacle lens adapting the local and partial removal of the optical interference layer. Even in a case where the first region producing the color tone γ is seen alone, a degree of freedom in changing the color tone γ by changing the regularity of the arrangement of the removed portions A is high. Although the degree of freedom in changing will be described later, the degree of freedom is significant along with the degree of freedom in decorating (decoration) described in this specification.

Therefore, even in the case of (2), there is no change in effect of the present invention that variations in color tone can be increased in the spectacle lens adopting the local and partial removal of the optical interference layers as compared with the conventional spectacle lens. The same can apply to the above case (1) of the solid pattern in regard to the fact that it is possible to increase variations in color tones of the spectacle lens adopting the local and partial removal of the optical interference layer as compared with the conventional spectacle lens. In view of the content described in this paragraph, the technical idea of the present invention is also reflected to the spectacle lens which defines only the first region. Therefore, each of the spectacle lens and techniques related thereto can also be defined as one invention.

By employing the above configuration, the first region and the second region are visually recognized as regions having mutually different color tones.

In this specification, the term "color tone" refers mainly to how a color is seen including brightness/darkness of the color, density of the color, brightness/darkness depending on intensity (difference) of the amounts of reflected light, and intensity of shining, and a different color tone means that any of these ways to see the color is differently recognized by an observer with normal visual ability. Furthermore, a change in hue seen due to a difference in the removed area percentage is also included in the change in color tone described herein. The change in color tone includes a change in how the color is seen due to changes in lightness, hue, and saturation which are expressed by a L*a*b* color space. For the L*a*b* color space, the official text of the color test sponsored by the Ministry of Education, Culture, Sports, Science and Technology, Level 1, February 14, 2022, third printing of the first edition, Color Coordination Association certified by the Cabinet Office, pages 50 to 52 can be referred to.

The term "how the spectacle lens in a worn state is seen by a third person (observer) from the object-side surface" in this specification includes how the spectacle lens is seen when the pupil of the third person receives reflected light from the spectacle lens in the worn state. Specifically, this corresponds to how the spectacle lens is seen at a relative position where a light source (sunlight, illumination light, or the like) located in an environment of the wearer can be incident on the decorative portion of the spectacle lens in the worn state and the reflected light obtained through regular reflection can be incident on the pupil of the third person.

### <Variations in Color Tones>

The present embodiment can further increase variations in color tones. For example, by utilizing the high degree of freedom in changing the color tone γ as described above, the regularity of the arrangement of the removed portions A may be changed in order to change the mixed color from, for example, light blue.

As for the regularity of the arrangement of the removed portions A, uniform regularity may be provided in the X and Y directions, or mutually different regularity may be provided in both of the directions (for example, Fig. 12).

Fig. 12 is a schematic diagram of one surface of the spectacle lens in plan view of the spectacle lens according to the embodiment, which illustrates the removed portions arranged with various kinds of regularity, the dashed lines indicate region units, and the XY lattice is composed of virtual lines. The XY lattice will be described later. The white arrows indicate that the removed portions have been arranged by changing the regularity from the regions at the roots of the white arrows to the regions at the tips of the arrows. The drawing illustrates an example in which every region is formed on the above-mentioned surface, the first region and the second region employ a common XY lattice, and each of the removed portions includes only one intersection of the XY lattice.

In this manner, the regularity is an important factor according to the technical idea of the present invention. In other words, the alignment pattern of the plurality of removed portions is based on a predefined rule (irrespective of a constant pitch or a non-constant pitch) and the color tones of the regions can be controlled depending on the rule. A specific example of the rule is the XY lattice, which is illustrated in Fig. 12.

As described above, a region capable of producing various color tones can be formed on one surface of the spectacle lens as illustrated in Fig. 12. The decorative portions may be provided on both the surfaces of the spectacle lens.

As illustrated in Fig. 12, the region configured of the non-removed portions (the region outside the dashed line) may be added to the variations in color tones. The second region may also include the region configured of the non-removed portions.

### <One Specific Example and Modification Examples of Configuration of Spectacle Lens>

In the spectacle lens 1, the decorative portion includes a plurality of regions having mutually different removal patterns composed of the removed portions A in plan view of the optical interference layer. Such plurality of regions correspond to the region x1 and the region x2 in Fig. 1 and correspond to the regions x31, x32 and x33 in Fig. 2. In each of the plurality of regions, the removed portions A constituting an arbitrary removal pattern are formed in plan view of the optical interference layer.

Both in Figs. 1 and 2, each of the regions (x1, x2, x31, x32, and x33) has a single color tone.

In this specification, the removal pattern constituted by the removed portions A is a pattern formed in a plane of the optical interference layer.

The patterns constituted by the removed portions A may be caused to differ from each other in each of the plurality of regions. In other words, the plurality of regions can include a first region formed with a pattern in which the removed portions A are aligned with first regularity and other regions in which the removed portions A are aligned with removal patterns that are different from the first removal pattern. In the other regions, the removed portions A may be formed with patterns in which the removed portions A are aligned with other regularity different from the first regularity. The plurality of regions may be in contact with each other as illustrated in Fig. 2 or may be considerably apart from each other as illustrated in Fig. 1. In a case where the regions are in contact with each other, a boundary at which the pattern changes corresponds to a boundary of the regions.

There is no limitation to the form of contact between the regions, and the first region may be surrounded by the second region, or there may be a plurality of the surrounded second regions, for example. Conversely, the second region may be surrounded by the first region, or there may be a plurality of the surrounded first regions. This relationship is also applicable to the following third region, fourth region, fifth region, ... which are equivalent to the first region or the second region.

The third region, the fourth region, the fifth region, ... that are regions equivalent to the first region or the second region may be provided. The removed portions are arranged with third regularity in the third region, the removed portions are arranged with fourth regularity in the fourth region, and the removed portions are arranged with fifth regularity in the third region. The first to fifth regularity differs from each other. The spectacle lens according to the present embodiment preferably includes the third region in addition to the first region and the second region, further preferably includes the fourth region, and yet further preferably includes the fifth region.

In the removal pattern constituted by the removed portions A, the removed portions A are aligned with predetermined regularity. The pattern may be constituted by units having a predetermined shape or may be formed by units having a predetermined shape being regularly aligned. Examples of the predetermined shape include a dot shape (point shape). The shape of each dot is not particularly limited, specific shapes of the dot may be a circle, an ellipse, a polygonal shape such as a triangle, a quadrangle, a pentagon, or a hexagon, or any other shape. For convenience of explanation, a case where the shape of each dot, that is, the shape of laser machining (spot), is a circle will be exemplified in this specification.

### <Removal Area Percentage and Others>

Hereinafter, a description will be given of the present embodiment focusing on a removed area percentage which is a ratio of an area occupied by the removed portions in one region. Note that it is a matter of course that the content described in this section can be combined with other descriptions in this specification.

The size of one region is defined to obtain the removed area percentage. For example, the region x33 in Fig. 2 is taken as an example. As illustrated as the region x33, a total area of the removed portions (dots) at both ends in the X direction and the parts sandwiched between the dots where a predetermined pattern is repetitively arranged may be defined as a size of one region. A total area of the removed portions (dots) at both ends in the Y direction and the parts sandwiched between the dots where a predetermined pattern is repetitively arranged may be defined as a size of one region.

Note that in the region x31 of Fig. 2, the repetition pattern ends halfway when viewed in the +X direction (rightward direction). In this case, the region up to the halfway position may be regarded as the region x31 (for example, the boundary between the regions x31 and x32 in Fig. 2). Conversely, in a case where the repetition pattern does not appear even after an original pitch when viewed in one direction, the removed portion (dot) nearest to the one direction side may be regarded as an end (for example, the left end of the region 31). The content described in this paragraph can also be applied to the Y direction.

An aspect of the present embodiment is a spectacle lens including an object-side surface and an eyeball-side surface, the spectacle lens including:
a lens substrate; and
an optical interference layer having a laminated structure on any of surfaces of the lens substrate,
in which a decorative portion that is formed by locally removing at least one layer of the optical interference layer and is visually recognizable is included,
the decorative portion includes a plurality of regions having mutually different removed area percentages of the removed optical interference layer in plan view,
the plurality of regions include a first region having a removal pattern obtained by aligning removed portions with first regularity with each of removed portions with dimensions equal to or less than 200 µm defined as a minimum unit, and
the plurality of regions are visually recognized as regions having mutually different color tones.

According to the present embodiment, a spectacle lens having a high degree of freedom in decoration in the spectacle lens can be obtained.

In the spectacle lens according to an aspect of the present embodiment, the decorative portion includes a plurality of regions, and each of the regions has removed portions obtained by removing at least one layer of the laminated structure of the optical interference layer. Furthermore, at least one region out of the plurality of regions has a removal pattern (this will be referred to as a first region) in which the removed portions are arranged with predetermined regularity (this will be referred to as first regularity) with each of removed portions with dimensions of equal to or less than 200 µm defined as a minimum unit.

The "minimum unit of the repetition of the removed portions" (also referred to as a "minimum unit of the removed portions" or simply a "minimum unit") in this specification indicates one dot in a case where the removed portions (dots) are not connected (for example, in (d) of Fig. 13). One dot, that is, one machining spot per pulse is also a minimum unit of machining and a minimum unit of drawing data.

In the case where the removed portions (dots) are connected to each other and are repeatedly arranged with the non-removed portions sandwiched between the connected bodies in the X direction and/or the Y direction (for example, (a) to (c) of Fig. 13), the "minimum unit of the removed portions" in this specification refers to each connected body. A case where one pixel, which is the minimum unit regarding the image data, is constituted by a plurality of dots, for example, is applied to this case (details will be described later). In this case, the connected bodies are repeatedly arranged in the X direction and/or the Y direction, for example. Note that two types of minimum units (one dot and a connected body of two dots) are combined with the two types of minimum units caused to be present in the region ((5) in the drawing) surrounded by the dashed line at the right lower portion of Fig. 12, which will be described later, thereby realizing regularity.

In a case where all the removed portions (dots) in one area are connected, the "minimum unit" indicates one dot.

Note that in the first region, there are non-removed portions between the removed portions (dots) even if all the removed portions (dots) are connected with each other. On the other hand, there may be a case where the non-removed portions are not present between the dots (in a so-called solid pattern) in the second region. In any of the cases described in this paragraph, the minimum unit is one dot.

Note that in some cases, the minimum unit is synonymous with the repeating unit in the regularity, and in other cases, the minimum unit is not synonymous with the repeating unit in the regularity, as indicated by the region (5) surrounded by the dashed lines at the right lower portion of Fig. 12, which will be described later.

Furthermore, the above plurality of regions include a region (this will be referred to as a second region) different from the first region, and the second region has a removed area percentage that is different from the removed area percentage in the first region. In other words, the removed area percentage differs in each of the plurality of regions. Although details will be described later, the visibility in each region is controlled by adjusting the removed area percentage for each region, such that different color tones can be recognized in the present embodiment in this manner. Furthermore, a degree of freedom in decorating the spectacle lens significantly increases, and it is possible to apply a desired design thereto, by defining each of the removed portions with a size of equal to or less than 200 µm, which is close to the resolution (resolution limit) of human eyes as a minimum unit in at least one region (for example, the first region) among the plurality of regions and forming a removal pattern constituted by these removed portions being aligned with predetermined regularity.

Here, the present inventor has discovered that by adjusting the removed area percentage of the removed portions in the region in plan view of the optical interference layer (hereinafter, also referred to as a "removed area percentage") in this removal, a plurality of regions distinguishable by naked eyes can be expressed, or the density and brightness/darkness of the color, their stepwise intermediate tones (hereinafter, also referred to as intermediate color tones), or gradation can be expressed when the decorative portion including such removed portions is seen.

In the present embodiment, the visibility in each region is controlled by adjusting the removed area percentage for each region, so that the regions can be recognized as having different color tones. Furthermore, a degree of freedom in decorating the spectacle lens is significantly improved and it is possible to apply a desired design thereto by defining each of the removed portions with a size of equal to or less than 200 µm, which is close to the resolution (resolution limit) of the human eyes, as a minimum unit in at least one region (for example, the above first region) among the plurality of regions and forming the removal pattern constituted by the removed portions being aligned with predetermined regularity.

In the present specification, the pattern of the removed portions A "being constituted with a size of equal to or less than 200 µm defined as a minimum unit" means that the length of the shortest part among representative lengths of the figure constituting the removed portions A is equal to or less than 200 µm. The representative lengths of the figure are the length for defining the dimensions of the figure, and for example, a diameter for a circle, and the lengths of the major and minor axes for an ellipse, the length of a diagonal for a polygon, the line length and the line width for a straight line are defined. The minimum unit of the pattern of the removed portions A may correspond to the resolution of the image data and the minimum unit by which the removed portions A can be machined in a method for producing a spectacle lens, which will be described later. In a case where the removed portions A are formed by laser machining, for example, the minimum unit is preferably substantially circular, and the spot diameter of the laser can correspond to the minimum unit size of the pattern of the removed portions A.

The above expression "the length of the shortest part is equal to or less than 200 µm" is defined on the basis of the following viewpoint. If any of the dimensions in the X direction and the Y direction is equal to or less than 200 µm, the size of the removed portions is small to an extent close to the limit of resolution of human eyes. In a case where the length of the longest part is a size in units of millimeters, each removed portion may be visually recognized as a single removed portion. However, in a case where the removed portions are excessively thin, each removed portion is not visually recognized as a single removed portion. In any of the cases, there is a high possibility that the color of the single removed portion cannot be identified. On the other hand, if a number of removed portions are regularly aligned, a color tone as a surface can be visually recognized there.

Note that a provision that "the length of the longest part (maximum width) is equal to or less than 200 µm" may be adopted instead of the provision that "the length of the shortest part is equal to or less than 200 µm". Thus, if a number of removed portions are regularly aligned, then a color tone as a surface can be visually recognized, while the single removed portion is not surely recognized by human eyes. The expression "equal to or less than 200 µm" described in this paragraph may further be "equal to or less than 100 µm", or may be "equal to or less than 70 µm".

In the spectacle lens of the present embodiment, at least two regions that are visually distinguishable by mutually different color tones may be formed by the decorative portion including a plurality of regions, by the regions including removal patterns constituted by the removed portions, and by changing the removed area percentages in the removal pattern for the respective regions. Although description will be given later in detail, the degree of freedom in decoration of the spectacle lens is improved by thus controlling the visibility in each region through adjustment of the removed area percentages in the respective regions and forming at least two regions in which regions having different color tones are distinguishable by visual recognition.

In a case where the removed portions are arranged with second regularity in the second region, that is, in a case where the second region is not constituted only by the non-removed portions, it is preferable that the arrangement modes of the removed portions be made to be different from each other between the first region and the second region. The "arrangement modes" indicate arrangement patterns of the centers of the removed portions in comparison between the first region and the second region.

The pattern constituted by the removed portions A can be formed into a stripe shape, a lattice shape, a combination of these, or the like by the dot-shaped removed portions being arranged, and the alignment thereof is not limited. It is only necessary for the removed portions A to be aligned with some regularity.

For example, the plurality of regions may include the second region with the removed area percentage of 100% by the removed portions A being aligned without gaps.

From the viewpoint of facilitating adjustment of the removed area percentage, which will be described later, it is preferable that the pattern of the removed portions A be constituted by a plurality of dots and/or a plurality of straight lines. Note that it is possible to state that even a pattern in which a predetermined region is constituted only by the removed portions A with no non-removed portions B located therein is also configured by a plurality of dots and/or a plurality of straight lines being aligned without gaps. Even in this case, a pattern obtained as a result of the removed portions A of one pixel, which is the minimum unit, being aligned with predetermined regularity is obtained. It is only necessary that the minimum unit be distinguished from a pattern of an intermediate color tone. The pattern of the removed portions A can be visually recognized by enlarging it using a microscope or the like.

For example, the removed portions A are composed of circular dots as constituent units in the region x1 and the region x2 in the enlarged view illustrated in the lower portion of Fig. 1. The region x1 and the region x2 are designed to have different dot pitches. In the region x1, a pattern in which adjacent dots partially overlap with adjacent dots is formed.

In this specification, the expression "adjacent" includes a state where the removed portions partially overlap each other, and also includes a state where the removed portions are spaced apart from each other at a distance that is short enough to exhibit a color tone that is different from both the non-removed portions B and the solid pattern when the removed portions are aligned with predetermined regularity even if they are not in contact with each other.

Also, in the enlarged view illustrated in the lower portion of Fig. 2, the decorative portion X3 includes regions x31, x32, and x33 with mutually different patterns of the removed portions A such that the regions x31, x32, and x33 are adjacent to each other. The regions x31, x32, and x33 are designed to have different dot pitches. In the region x33, a pattern in which adjacent dots partially overlap with adjacent dots is formed.

As described above, the removed portions A and the non-removed portions B are differently seen when the spectacle lens in a worn state is seen by a third person from the object-side surface due to a difference in optical characteristics (for example, reflectance) therebetween. If the decoration is given by simply forming only the removed portions A, a two-tone design of a decorated region constituted only by the removed portions A and a non-decorated region constituted only by the non-removed portions B is formed.

On the other hand, it is possible to identify a halftone region having a color tone that is different from those of the region constituted only by the removed portions A and the region constituted only by the non-removed portions B by defining the size of the removed portions A of equal to or less than 200 µm as a minimum unit and aligning the removed portions A with the size with predetermined regularity in the present embodiment. As a result, it is possible to enhance the degree of freedom in decoration of the spectacle lens according to the present embodiment.

The minimum unit size (a dot in a specific example) of the pattern of the removed portions A is preferably equal to or greater than 3 µm and equal to or less than 180 µm, is more preferably equal to or greater than 5 µm and equal to or less than 150 µm, and is further preferably equal to or greater than 10 µm and equal to or less than 120 µm, is still more preferably equal to or greater than 15 µm and equal to or less than 100 µm, and is particularly preferably equal to or greater than 20 µm and equal to or less than 80 µm, for example. The minimum unit size of the pattern of the removed portions A may be equal to or less than 60 µm, equal to or less than 50 µm, or equal to or less than 40 µm within the above range. There is a trend that it is possible to form the halftone more naturally by setting the minimum unit size within the above range. Furthermore, there is a trend that it is possible to form the pattern of the removed portions A more easily and to provide a spectacle lens having high productivity. The minimum size can be determined by the pixel size in the image data.

Furthermore, the spectacle lens according to the present embodiment has a plurality of regions with mutually different rates of areas occupied by the removed portions A (removed area percentages) in the pattern of the removed portions A. By changing the rates of the areas occupied by the removed portions A in the pattern of the removed portions A for the respective regions in this manner, it is possible to change the ratios of the presence of the removed portions A and the non-removed portions B for the respective regions. Therefore, it is possible to control how each region is seen by adjusting the removed area percentage. For example, the decorative portion can be caused to gradually shift from how the region constituted only by the non-removed portions B is seen to how the region constituted only by the removed portions A is seen by gradually increasing the removed area percentage from 0% to 100%. As a result, the degree of freedom of decoration in the decorative section can be enhanced.

In this specification, the removed area percentage is the rate of the area occupied by all of the removed portions A in plan view of the optical interference layer in a predetermined region. The removed area percentage P_{A} can be defined for each region having a certain pattern and is obtained by the following expression when the area occupied by the removed portions A in each region is defined as S_{A}, and the area occupied by the non-removed portions B is defined as S_{B}. In other words, the removed area percentage P_{A} is defined as a ratio of the area occupied by the removed portions A to the entire area of each region. ${P}_{A} = {S}_{A} / \left({S}_{A}+{S}_{B}\right)$

In each of the plurality of regions constituting the decorative portion, the removed area percentage of the pattern of the removed portions A is not particularly limited and may be greater than 0% and equal to or less than 100%. The removed area percentage may be, for example, equal to or greater than 5%, equal to or greater than 10%, equal to or greater than 20%, equal to or greater than 30%, equal to or greater than 40%, equal to or greater than 50%, equal to or greater than 60%, equal to or greater than 70%, or equal to or greater than 80% and may be equal to or less than 99%, equal to or less than 98%, equal to or less than 95%, equal to or less than 90%, equal to or less than 85%, equal to or less than 80%, equal to or less than 70%, equal to or less than 60%, or equal to or less than 50% within the range. The removed area percentage may be within a range defined by any of the upper limit values and any of the lower limit values described above and may be, for example, equal to or greater than 5% and equal to or less than 99%, equal to or greater than 10% and equal to or less than 95%, or equal to or greater than 20% and equal to or less than 90%.

Although removal area percentages of the patterns of the removed portions A in the respective regions can be caused to differ from each other, the difference is not particularly limited. The difference in removed area percentages between the regions is preferably equal to or greater than 1% and equal to or less than 98%, is more preferably equal to or greater than 2% and equal to or less than 95%, is further preferably equal to or greater than 3% and equal to or less than 90%, is yet more preferably equal to or greater than 5% and equal to or less than 85%, and is particularly preferably equal to or greater than 10% and equal to or less than 80%. The difference in removed area percentages between the regions may be equal to or greater than 20% or may be equal to or less than 70% within the above range. Moreover, although the difference in removed area percentages between the region with the highest removed area percentage and the region with the lowest removed area percentage among the plurality of regions is not particularly limited, the difference is preferably equal to or greater than 10% and equal to or less than 99%, is more preferably equal to or greater than 15% and equal to or less than 95%, and is further preferably equal to or greater than 20% and equal to or less than 90%. By setting the difference in removed area percentages of the patterns of the removed portions A in the respective regions to fall within the above range, it is possible to more clarify the difference in how each region is seen.

There is a general trend that the higher the removed area percentage becomes, the higher the visibility of the decorative portion is. Specifically, since the quantity of reflected light generated at the removed portions A increases. A color tone of the reflected light is more likely to be visually recognized as being brighter, darker, or strongly shining.

In each of the plurality of regions constituting the decorative portion, the removed area percentage can be adjusted by appropriately designing the pattern of the removed portions A. Fig. 3 illustrates a schematic view of the pattern of the removed portions A formed by dots. In Fig. 3, (a) is an example of a pattern of an intermediate color tone, and (b) is an example of a solid pattern. In a case where the pattern of the removed portions A is configured of dots, for example, the removed area percentage can be adjusted by adjusting the dot density. In a case where the dots are arranged regularly, in particular, it is possible to adjust the dot density and to thereby adjust the removed area percentage by adjusting the distance between dots (the distance between the centers of gravity of the closest dots; hereinafter, also referred to as a "pitch"), or by setting the distance between the dots such that a solid pattern can be formed with the distance and thinning the dots from the solid pattern.

As to the "thinning", the laser irradiation portions in the first region may be arranged in such a manner that some of the laser irradiation portions in the second region, for example, are thinned out (for example, the region x1 → the region x2 in Fig. 1) in the case as described in the above paragraph, for example. As a result, the removed portions in the first region may be arranged in accordance with the first regularity by thinning out some of the removed portions in the second region in plan view of the spectacle lens. This "before and after the thinning" is included in a modification of the "arrangement mode" described above.

Furthermore, in the case where the pattern of the removed portions A is constituted by straight lines, the removed area percentage can be adjusted by adjusting the distance between the straight lines which are substantially parallel straight lines.

In the case where the removed portions A are formed by laser machining, the minimum unit is preferably a circle as illustrated in Fig. 4, and the laser spot diameter can correspond to the minimum unit size of the pattern of the removed portions A. Note that Fig. 4 is an observed image when the removed portions A are formed by laser machining, in which circular dots correspond to the removed portions A and the periphery of the dots corresponds to the non-removed portions B.

Fig. 5 illustrates an example of a pattern sample of the removed portions A formed by dots. In Fig. 5, the pattern of the removed portions A may be varied from A high area removal percentage (a) to an intermediate area removal percentage (b) and then to a low area removal percentage (c).

In Figs. 1 and 2, the removed area percentage of the removed portions A is adjusted by adjusting the dot density. In Fig. 1, the removed area percentage of the region x1 is made to be higher than the removed area percentage of the region x2 so that how the decorative portion X1 looks and how the decorative portion X2 looks become different from each other. Specifically, the decorative portion X1 is made to have a darker reflection color, a larger amount of reflection light, or a stronger shining. In Fig. 2, the removed area percentages in the regions x31, x32, and x33 constituting the decorative portion X3 are gradually increased in this order, such that the decorative portion X3 is made to have a decoration with gradation.

In a spectacle lens according to another aspect of the present embodiment, it is not always necessary that the pattern of the removed portions A be formed with the size of equal to or less than 200 µm defined as the minimum unit as long as each of the plurality of regions is configured to be identifiable by visual recognition as a part with a different color tone. For example, even if the minimum unit of the pattern of the removed portions A exceeds 200 µm depending on a design of the pattern of the removed portions A, it is possible to realize an intermediate appearance between the region constituted only by the removed portions A and the region constituted only by the non-removed portions B.

Accordingly, in the spectacle lens according to another aspect of the present embodiment, it is only necessary for the plurality of regions to include at least the first region and another region that is different from the first region and be configured such that the decoration corresponding to the first region and the decoration corresponding to the other regions are distinguishable by visual recognition. Note that the difference in how the decorative portion corresponding to the first region looks and how the decorative portion corresponding to the other regions looks is caused by the difference in the removed area percentages in these regions.

In this specification, the phrase "visual recognition" in the context of "how the decorative portion corresponding to the first region looks and how the decorative portion corresponding to the other region looks are identifiable by visual recognition" or the like means that the decorative portions are recognized by reflected light generated in the above first and second regions entering eyes of a third person seeing the spectacle lens in a worn state. Here, even in a case where the boundary cannot be clearly recognized when the plurality of regions having different removal area percentages are in contact with each other, "visual recognition" is considered to be possible if a plurality of color tones originating from the plurality of regions can be recognized.

As illustrated in Figs. 1 and 2, the decorative portion is formed by the removed portions obtained by removing at least one layer of the laminated structure of the optical interference layer, and it is thus possible to set higher reflectance of visible light in the removed portions than in the non-removed portions, in the spectacle lens 1 according to the present embodiment. Therefore, when such decorated lens is seen, the decorative portion can be visually recognized by reflected light entering the eyes. Note that since the removed portions have sufficient smoothness, regular reflection is dominant for the reflection of light incident on the removed portions. On the other hand, since it is difficult for the reflected light obtained by regular reflection by the removed portions to enter the eyes of the wearer wearing the spectacles, the wearer does not substantially recognize the decorative portion. Furthermore, since the transmittance of the removed portions is high, the wearer can clearly see the outside through sufficient field of view as in the case of ordinary spectacle lenses. In other words, the function of spectacles can be sufficiently maintained without hindering the field of view of the wearer of the spectacles.

Accordingly, the decorative portions X1 to X3 may be present within a spectacle frame shape line 2 in Figs. 1 and 2. In the spectacle lens 1, a design pattern can be formed within the spectacle frame shape line, and a new design that has not been achieved in conventional spectacle lenses is created. From the same point of view, the decorative portion may be present within a region with a radius of 30 mm from the lens center.

Although the decorative portion, which will be described later, can be formed by laser irradiation, the decorative portion may be formed from either the object-side surface or the spectacle-side surface of the spectacle lens. It is preferred that the decorative portion be visually recognizable from both the sides. This is useful because the person who is about to wear the spectacles can check the decoration of his/her own spectacles. However, as described above, the decorative portion is not recognized in the field of view of the person wearing the spectacles, and the field of view is thus not obstructed.

In the spectacle lens according to the present embodiment, a ratio of the area of the decorative portion to the entire spectacle lens may be equal to or greater than 5% and equal to or less than 99% in plan view. In other words, since the field of view of the wearer of the spectacles is unlikely to be obstructed, problems in wearing the spectacles are unlikely to occur even in a case where the area in which the decorative portion is formed occupies a large proportion to the total area of the spectacle lens.

### <Further Specific Example of Configuration of Spectacle Lens>

The spectacle lens according to the present embodiment includes the lens substrate and the optical interference layer. The spectacle lens according to the present embodiment may include at least one kind of layer selected from the group consisting of a hard coat layer, a foundation layer, and a water-repellent layer.

Fig. 5 is a schematic sectional view of the spectacle lens 1 according to the present embodiment. The spectacle lens 1 according to the present embodiment includes a lens substrate 11, a hard coat layer 12f provided on an object-side surface 11a side of the lens substrate 11, an optical interference layer 13f provided on an object-side surface 12fa side of the hard coat layer 12f, and a water-repellent layer 14f provided on the object-side surface 13fa side of the optical interference layer 13f.

In a case where the lens substrate 11 is a finished lens (a lens formed with double optical surfaces), the spectacle lens 1 according to the present embodiment further includes a hard coat layer 12b provided on the eyeball-side surface 11b side of the lens substrate 11, an optical interference layer 13b provided on the eyeball-side surface 12bb side of the hard coat layer 12b, and a water-repellent layer 14b provided on the eyeball-side surface 13bb side of the optical interference layer 13b. Also, the spectacle lens 1 includes the removed portions A obtained by removing at least a part of the optical interference layer on the eyeball-side surface or the object-side surface (on the eyeball side in Fig. 5).

Note that although not illustrated in the drawing, a foundation layer may be provided between the lens substrate 11 and the hard coat layer 12f or between the lens substrate 11 and the hard coat layer 12b.

### (Lens Substrate)

Examples of a resin for the lens substrate include a urethane resin, an episulfide resin, a polycarbonate resin, and an acrylic resin.

The surface shape of the lens substrate is not particularly limited and may be flat, convex, concave or the like. The lens substrate may be used for any application such as a single focal lens, a multifocal lens, and a progressive power lens. For example, for a progressive power lens, a near portion region (near portion) and a progressive portion region (intermediate region) are usually included in the above-mentioned lower region, and a distant portion region (distance portion) is included in an upper region in an example.

The optical center thickness of the lens substrate is not particularly limited, and is preferably equal to or greater than 0.5 mm and equal to or less than 10.0 mm or less, is more preferably equal to or greater than 0.5 mm and equal to or less than 5.0 mm, further preferably equal to or greater than 0.5 mm and equal to or less than 3.0 mm, and further preferably equal to or greater than 0.5 mm and equal to or less than 2.0 mm.

The diameter of the lens substrate is not particularly limited, and is usually about 50 mm to 100 mm.

The refractive index ne of the lens substrate is preferably equal to or greater than 1.52, more preferably equal to or greater than 1.53, still more preferably equal to or greater than 1.55, yet more preferably equal to or greater than 1.58, and even more preferably equal to or greater than 1.60.

In order to enhance an effect of improving the Abbe number according to the inclusion of Compound 1, the refractive index ne of the lens substrate is preferably equal to or greater than 1.70, and more preferably equal to or greater than 1.74.

Here, although the upper limit of the refractive index ne of the lens substrate is not particularly limited, it may be, for example equal to or less than 1.80.

### (Hard Coat Layer)

The spectacle lens according to the present embodiment may further have a hard coat layer to prevent the spectacle lenses from being scratched. The hard coat layer is, for example, a cured film of a curable composition containing an inorganic oxide and a silicon compound. The curable composition may further contain a polyfunctional epoxy compound.

Examples of inorganic oxides include silicon oxide, aluminum oxide, titanium oxide, zirconium oxide, tungsten oxide, zinc oxide, tin oxide, beryllium oxide, antimony oxide, and composite oxides formed of two or more of these inorganic oxides. These may be used alone or two or more thereof may be used in combination. Among these inorganic oxides, silicon oxide is preferable. Here, colloidal silica may be used as the inorganic oxide.

The content of the inorganic oxide in the solid content of the curable composition is preferably equal to or greater than 20 mass% and equal to or less than 80 mass%, more preferably equal to or greater than 25 mass% and equal to or less than 70 mass%, and still more preferably equal to or greater than 25 mass% and equal to or less than 50 mass%.

The silicon compound is, for example, a silicon compound having a hydrolyzable group such as an alkoxy group. The silicon compound is preferably a silane coupling agent containing an organic group and a hydrolyzable group bonded to silicon atoms. The organic group bonded to silicon atoms is preferably an organic group having a functional group, for example, an epoxy group such as a glycidoxy group, a vinyl group, a methacryloxy group, an acryloxy group, a mercapto group, an amino group, and a phenyl group, and more preferably an organic group having an epoxy group. Here, the silicon compound may have an alkyl group bonded to silicon.

The above hard coat layer can be formed by applying a curable composition to the substrate and performing a curing treatment (thermal curing, photocuring, etc.). As a method of applying a curable composition, commonly used methods such as a dipping method, a spin coating method, and a spray method can be applied. The curing treatment is usually performed by performing heating on a curable composition containing a polyfunctional epoxy compound. For example, the heat curing treatment can be performed by disposing the lens coated with the above curable composition under an environment of an atmospheric temperature of 50°C to 150°C for about 30 minutes to 3 hours.

### (Foundation Layer)

For example, the above foundation layer can be formed from an aqueous resin composition containing at least one resin particle selected from the group consisting of a polyurethane resin, an acrylic resin, and an epoxy resin.

As the above aqueous resin composition, a commercially available aqueous polyurethane can be used without change or one that is diluted with an aqueous solvent as necessary can be used. Examples of commercially available aqueous polyurethanes include "Evafanol" series (product name, commercially available from Nicca Chemical Co., Ltd.), "SuperFlex" series (product name, commercially available from DKS Co., Ltd.), "Adeka Bontighter" series (product name, commercially available from ADEKA Corporation), "Olester" series (product name, commercially available from Mitsui Chemicals Inc), "Bondic" series and "Hydran" series (product name, commercially available from Dainippon Ink and Chemicals, Inc.), "Impranil" series (product name, commercially available from Bayer AG), "Soflanate" series (product name, commercially available from Japan Soflan Co., Ltd.), "Poiz" series (product name, commercially available from Kao Corporation), "Sanprene" series (product name, commercially available from Sanyo Chemical Industries, Ltd.), "Aizerax" series (product name, commercially available from Hodogaya Chemical Co., Ltd.), and "NeoRez" series (product name, commercially available from AstraZeneca).

The foundation layer can be formed, for example, by applying the above aqueous resin composition to the surface of the substrate and drying it.

### (Optical Interference Layer)

The optical interference layer has a laminated structure. The optical interference layer is, for example, an antireflection film having a multilayer structure in which low refractive index layers and high refractive index layers are laminated, and the removed portions are obtained by partially removing the low refractive index layer that is the outermost surface layer of the multilayer structure. As a result, the high-refractive-index layer may be exposed in the removed portions. The number of layers that the antireflection layer has is preferably 4 to 11, is more preferably 5 to 10, and is further preferably 7 to 9. However, the present invention is not limited to the preferred example. For example, a laminated structure of Cr and SnO₂ as described in Example 1 of PTL 1 may be employed.

The refractive index of the low refractive index layer is preferably 1.35 to 1.80 and more preferably 1.45 to 1.50 at a wavelength of 500 nm to 550 nm. The low refractive index layer is formed of an inorganic oxide and preferably formed of silicon oxide.

The refractive index of each high refractive index layer is preferably 1.90 to 2.60 and is more preferably 2.00 to 2.40 at a wavelength of 500 nm to 550 nm. The high refractive index layer is made of, for example, an inorganic oxide. Preferable examples of the inorganic oxide used for the high refractive index layer are preferably at least one kind selected from the group consisting of zirconium oxide, tin oxide (SnO₂), indium tin oxide (ITO), tantalum oxide, yttrium oxide, titanium oxide, niobium oxide, and aluminum oxide, and more preferably at least one kind selected from the group consisting of zirconium oxide and tantalum oxide.

At least one of the high refractive index layers constituting the optical interference layer is preferably made of an electrically conductive material such as tin oxide (SnO₂) or indium tin oxide (ITO). The use of a conductive material makes it possible to impart an antistatic function to the spectacle lens.

The optical interference layer may include a metal layer. The metal layer means a layer having a metal color. Examples of a substance used in the metal layer include a substance that has a metal color and at least one kind selected from metal, an oxide, a nitride, a carbide, and a nitrogen oxide of metal, and the substance is preferably metal from the viewpoint of availability. Examples of metal species contained in the metal layer include at least one kind selected from Cr, Ta, Nb, Ti, and Zr. The provision of the metal layer also exhibits an antistatic effect. One metal layer or a plurality of metal layers may be included in the optical interference layer.

A configuration example of the optical interference layer is shown in the following Table. In the table, "No." denotes the number of each layer illustrated in the drawings.

**[Table 1]**

| Surface Side | | | |
|---|---|---|---|
| No. | Material | Refractive Index | Thickness (nm) |
| 131a | SiO₂ | 1.47 | 107.9 |
| 132a | SnO₂ | 1.97 | 7.50 |
| 132b | ZrO₂ | 2.09 | 49.1 |
| 131b | SiO₂ | 1.47 | 33.1 |
| 132c | ZrO₂ | 2.09 | 19.1 |
| 131c | SiO₂ | 1.47 | 389.9 |
| 132d | ZrO₂ | 2.09 | 5.4 |
| 131d | SiO₂ | 1.47 | 29.9 |
| Lens Substrate Side | | | |

An average reflectance in the visible light region (hereinafter, also simply referred to as an "average reflectance") can be adjusted by changing the thickness of each layer and the number of layers laminated in the optical interference layer. The average reflectance of the optical interference layer can be adjusted by changing the thickness of each layer, the number of layers laminated, and the like, and it is possible to calculate an optimal thickness of a configuration of each layer using thin film calculation software "Essential Macleod" (manufactured by Thin Film Center Inc.), for example.

For the optical interference layer, low refractive index layers and high refractive index layers can be alternately laminated by a vacuum deposition method to thereby form an antireflection layer.

Fig. 6 is a front view of the spectacle lens according to the present embodiment. As illustrated in Fig. 6, the spectacle lens according to the present embodiment includes the removed portions A and the non-removed portions B in plan view with respect to the optical interference layer.

Fig. 7 is a schematic sectional view of the spectacle lens according to the present embodiment. In Fig. 7, low refractive index layers 131a to 131d or high refractive index layers 132a to 132d constitute the optical interference layer 13f in Fig. 5. The schematic sectional view of Fig. 7 is a drawing illustrating a section taken along x-x' in Fig. 6. As illustrated in Fig. 7, the removed portions A are regions where at least parts of the low refractive index layers 131a to 131d or high refractive index layers 132a to 132d of the optical interference layer are not present. The removed portions A are formed by removing at least a part of the low refractive index layers or the high refractive index layers in the optical interference layer. On the other hand, the non-removed portions B are regions where the part of the low refractive index layers 131 or the high refractive index layers 132 of the optical interference layer are present. The non-removed portions B are regions where the low refractive index layers and the high refractive index layers of the optical interference layer are not removed.

The optical interference layer of the spectacle lens is usually designed so as to reduce light reflected from the object-side surface, that is, light incident from the object-side surface and reflected on the object-side surface. Therefore, the reflectance of the reflected light from the object-side surface (intensity of reflected light) changes, and typically, the reflectance increases, by removing at least one layer of the laminated structure of the optical interference layer. In other words, the removed portions A have a different reflectance in the visible light region as compared with the non-removed portions B and typically have higher reflectance in the spectacle lens according to the present embodiment. Accordingly, the decorative portion of the spectacle lens according to the present embodiment can enhance visibility from a third person. In this specification, the "visible light region" is a region of a wavelength of 380 nm to 780 nm.

For example, the average reflectance of the visible light at the removed portions A formed on one surface of the spectacle lens can be equal to or greater than double the average reflectance of the visible light at the non-removed portions B. It is preferable that this feature be the same both on the side where the lens is formed and on the opposite side.

### (Water-Repellent Layer)

The spectacle lens according to the present embodiment may further have a water-repellent layer on the side closer to the surface layer than the optical interference layer. The water-repellent layer can be formed using a water-repellent material composition containing a fluorine-containing silane compound having a fluoroalkyl group. Although the water-repellent layer may be formed on the hard coat layer or formed on the optical interference layer, the water-repellent layer is preferably formed on the antireflection layer. Moreover, the water-repellent layer is preferably located on the outermost surface.

### <Physical Properties of Spectacle Lens>

In the present embodiment, a ratio (R_{A}/R_{B}) of the average reflectance R_{A} in the region configured of the removed portions A to the average reflectance R_{B} in the region configured of the non-removed portions B with respect to the like incident from the object-side surface is preferably equal to or greater than 1.5, is more preferably equal to or greater than 2.0, is further preferably equal to or greater than 2.5, and is yet further preferably equal to or greater than 3.0. Although an upper limit of the ratio (R_{A}/R_{B}) is not particularly limited, the upper limit may be, for example, equal to or less than 6.0.

Note that the above values are values in the case where decoration is applied to the spectacle-side surface of the spectacle lens. However, the similar numerical range is preferably applied even in a case where decoration is applied to the object-side surface.

Furthermore, the spectacle lens has a relatively high reflectance in a specific wavelength region depending on the layer configuration of the optical interference layer, and a slight difference in hue may be felt between the region configured of the removed portions A and the other regions. Therefore, a spectrum of the light reflected from the object-side surface may be changed, and any of the hue, the lightness, and the saturation of the reflected light may be changed by at least one layer of the laminated structure of the optical interference layer being removed. In other words, in the spectacle lens according to the present embodiment, at least one of the hue, the lightness, and the saturation of reflected light in the removed portions A is different from that of the non-removed portions B. Accordingly, the decorative portion of the spectacle lens according to the present embodiment can enhance visibility from a third person.

In the present embodiment, the wavelength of the highest reflectance at the reflection spectrum in the visible light region may be different between the region configured of the removed portions A and the region configured of the non-removed portions B.

In general, in a spectacle lens, there is a trend that the layer configuration of the optical interference layer has a small influence on the transmittance (intensity of transmitted light) of light transmitting through the lens. Accordingly, even if at least one layer of the laminated structure of the optical interference layer is removed, the transmittance of the transmitted light is not significantly degraded in the spectacle lens according to the present embodiment as well.

In the spectacle lens according to the present embodiment, the ratio of the luminous transmittance T_{A} of the removed portions A (T_{A}/T_{B} × 100) to the luminous transmittance T_{B} of the non-removed portions B is preferably equal to or greater than 80%, is more preferably equal to or greater than 83%, and is further preferably equal to or greater than 85%. Although an upper limit of the ratio (T_{A}/T_{B} × 100) is not particularly limited, the upper limit is, for example, equal to or less than 98%. By the numerical value of T_{A} with respect to T_{B} falling within the above-mentioned range, the wearer can recognize both the regions as being transparent and can hardly recognize any difference in the luminous transmittance, and the field of view of the wearer is more unlikely to be obstructed.

The above luminous transmittance can be measured by the method defined by JIS T 7333:2018 (ISO 8980-3:2013). The luminous transmittance is the transmittance at the optical center of the spectacle lens and can be measured using a spectrophotometer. As the spectrophotometer, for example, a "U-4100" (product name, commercially available from Hitachi, Ltd.) can be used. This device is also used in the examples described later. The average reflectance can also be measured with this device.

In the spectacle lens according to the present embodiment, the above average reflectance R_{B} is preferably equal to or less than 10%, is more preferably equal to or less than 5%, and is further preferably equal to or less than 3%. By the removed portions A being formed with a low designed average reflectance R_{B}, a difference from the non-removed portion B serving as a background of the decoration can be easily visually recognized even with a slight increase in reflectance. Also, the average reflectance R_{B} may be equal to or greater than 0.5%, equal to or greater than 1.0%, or equal to or greater than 1.5%. The average reflectance R_{B} may be equal to or greater than 0.5% and equal to or less than 10%, equal to or greater than 1.0% and equal to or less than 5%, or equal to or greater than 1.5% and equal to or less than 3%.

The above average reflectance R_{A} is preferably higher than the average reflectance R_{B}, preferably greater than 3%, more preferably equal to or greater than 4%, further preferably greater than 5%, still more preferably equal to or greater than 6%, yet more preferably equal to or greater than 7%, and particularly preferably equal to or greater than 8%. By the average reflectance R_{A} being higher than the average reflectance R_{B}, visibility from a relative person can be enhanced. By adjusting the design of the optical interference layer and by securing flatness of the machined surface of the removed portions A, the average reflectance R_{A} can be set within the above range. Although an upper limit of the average reflectance R_{A} is not particularly limited, the upper limit may be, for example, equal to or less than 20%, equal to or less than 18%, or equal to or less than 15%. The average reflectance R_{A} may be equal to or greater than 4% and equal to or less than 20%, greater than 5% and equal to or less than 18%, equal to or greater than 6% and equal to or less than 15%, equal to or greater than 7% and equal to or less than 15%, or equal to or greater than 8% and equal to or less than 15%.

The above luminous transmittance T_{B} is preferably equal to or greater than 90%, is more preferably equal to or greater than 93%, is further preferably equal to or greater than 95%, and is further preferably equal to or greater than 97%. The increase in luminous transmittance T_{B} makes the field of view of the wearer difficult to be disturbed. Although an upper limit of the luminous transmittance T_{B} is not particularly limited, the upper limit is, for example, equal to or less than 99%.

The luminous transmittance T_{A} is preferably equal to or greater than 80% and is more preferably equal to or greater than 82%. The increase in luminous transmittance T_{A} makes the field of view of the wearer difficult to be disturbed. Although an upper limit of the luminous transmittance T_{A} is not particularly limited, the upper limit may be, for example, equal to or less than 95%, equal to or less than 90%, less than 90%, or equal to or less than 89%. The luminous transmittance T_{A} may be equal to or greater than 80% and equal to or less than 95%, equal to or greater than 82% and equal to or less than 90%, equal to or greater than 82% and less than 90%, or equal to or greater than 82% and equal to or less than 89%.

The luminous transmittance of the spectacle lens is preferably equal to or greater than 70%, is more preferably equal to or greater than 80%, is further preferably equal to or greater than 85%, and is further preferably equal to or greater than 90%. Although an upper limit of the luminous transmittance is not particularly limited, the upper limit may be, for example, equal to or less than 100% or equal to or less than 95%.

By the average reflectance and the luminous transmittance satisfying the above-described conditions, the visibility of the decoration from the relative person is further enhanced, while the visibility of the wearer is caused to be less likely to be destructed.

### [Method for Producing Spectacle Lens]

A method for producing the spectacle lens of the present embodiment will be described below. For content not described below (for example, preferred examples), the content described in above [Spectacle Lens] can be used instead. Conversely, the following content may be used as preferred examples for above [Spectacle Lenses]. At this time, spots can be replaced with dots or removed portions.

### <Overview of Method for Producing Spectacle Lens>

The method for producing a spectacle lens of the present embodiment includes forming a decorative portion by machining a spectacle lens including a lens substrate and an optical interference layer that is formed on the lens substrate and has a laminated structure. Also, the method for producing a spectacle lens includes preparing image data in accordance with a desired decoration design (hereinafter, this may be referred to as Step S1), a process of creating drawing data for laser machining on the basis of the image data (hereinafter, this may be referred to as Step S2), and a laser irradiation process of forming the decorative portion by irradiating the optical interference layer with laser while performing laser beam scanning by a laser irradiation apparatus by using the drawing data.

The design such as letters, symbols, illustrations, and the like formed on the decorative portion is configured in the form of image data based on the desired design. The image data is preferably binary data. Such image data has a pixel size determined by a predetermined resolution (pixel density dpi), and such a pixel size is a minimum unit constituting an image to be drawn on the lens.

Then, drawing data to be used in the machining of the optical interference layer by irradiating the optical interference layer with a laser beam such as pulsed laser by the laser irradiation device is created on the basis of such image data. This is a process of creating drawing data including a scheduled laser irradiation portion on the surface provided with the optical interference layer from the image data of the desired decoration design.

Figs. 8 and 9 are flow diagrams illustrating an example of a procedure for the method for producing the spectacle lens according to the present embodiment. As illustrated in Figs. 8 and 9, laser machining is performed on predetermined portions of the spectacle lens including the optical interference layer. This is a laser irradiation process of forming the removed portions by irradiating the optical interference layer with laser while performing laser beam scanning by the laser irradiation apparatus by using the drawing data.

The spectacle lens includes the lens substrate and the optical interference layer having a laminated structure in which low refractive index layers and high refractive index layers are laminated. In the spectacle lens, other layers such as a hard coat layer, an underlayer, and a water-repellent layer may be formed as described above. Note that frame cutting along the contour of the lens shape may be carried out before the laser machining (see Fig. 8) or after the laser machining (see Fig. 9).

As illustrated in Fig. 8, in the case where decoration machining is performed after the frame cutting, jig blocking is performed first in which one optical surface (specifically, an optical surface on which decoration machining as will be described later is not performed) of the spectacle lens to be machined is mounted on a dedicated jig (S101). Then, the spectacle lens under the blocking is set in a lens machining device, and the spectacle lens is subjected to the lens shaping (frame cutting) to cut the outer shape of the spectacle lens into the frame shape (S102). Since the jig blocking and the frame cutting may be carried out using known techniques, detailed explanations thereof will be omitted here.

In the laser machining, the lens height of the machined area (that is, the three-dimensional shape of the machined area on the machined surface) of the machined surface (specifically, the surface which is not blocked) of the spectacle lens as a target of the machining is measured in a blocked state with the jig (S103). Although a measuring method is not particularly limited, the measurement may be performed using, for example, a non-contact type three-dimensional measuring instrument. The machined area is a region including a laser scanning area, which will be described later.

After S103, or before or in parallel with S101 to S103, image data is prepared as described above (S1), and then drawing data is created on the basis of the image data (S2). After the height of the lens in the machining area is measured, laser machining of irradiating the machining area with laser light is performed, and raster scanning is performed in which the irradiation position of the laser beam is moved on the basis of shape data (that is, contour data of the lens shape) prepared in advance (S104). Note that the raster scanning may also be replaced with vector scanning. In the present embodiment, before the frame cutting, the spectacle lens is subjected to laser machining based on the contour data of the frame shape, and a design pattern configured by the machined portions (removed portions A: incomplete optical interference layer) and the unmachined portions (non-removed portions B: complete optical interference film) is formed.

After the design pattern is formed by laser machining, jig deblocking of removing the spectacle lens from the dedicated jig is performed (S105), and the removed spectacle lens is cleaned for removing remaining substances or adhering matters (foreign matters) from the laser processing (S106). Then, through a final lens appearance inspection (S107), the fabrication of the spectacle lens is completed.

On the other hand, in a case where the frame cutting is performed after the design pattern is formed (after the laser machining) as illustrated in Fig. 8, the spectacle lens to be machined is subjected to jig blocking first as in S105 (S111). Next, the lens height in the machining area (that is, the three-dimensional shape of the machining area on the machined surface) on the machined surface of the spectacle lens to be machined is measured (S112). A measuring method is the same as in the case where the decoration machining is performed after the frame cutting as described above.

After the measurement of the lens height in the machining area, laser machining of irradiating the machining area with the laser light is then performed, and a raster scan in which the irradiation position of the laser light is moved on the basis of the drawing data prepared in advance is performed (S113). Instead of the raster scanning, vector scanning may be adopted. Thus, the laser machining is performed on the machining area on the machined surface of the spectacle lens.

After the design pattern is formed (after the laser machining), frame cutting is performed on the spectacle lens after the laser machining. In other words, the spectacle lens which has been blocked is set in the lens shaping machine to subject the spectacle lens to the lens shaping (frame cutting), and the outer shape of the spectacle lens is cut into the frame shape (S114). After the frame cutting, jig deblocking of removing the spectacle lens from the dedicated jig is performed (S115), and the removed spectacle lens is subjected to lens cleaning to remove remaining substances and adhering substances (foreign matters) from the machining (S116). Then, through a final lens appearance inspection (S117), the fabrication of the spectacle lens is completed.

### <Setting of Spot Size (and Thus Sizes of Removed Portions and Dots)>

Here, the manufacturing method according to the present embodiment preferably includes a process of determining a diameter (hereinafter, also referred to as a machining diameter) of one machining spot (hereinafter also referred to as a spot) in irradiation with pulsed laser corresponding to one pulse of pulsed laser in accordance with the specifications of the device and the performance of the optical system. This is the minimum machining unit in the drawing for removing the optical interference layer. As a result, the correspondence between the pixel size of the image data and the machining spot size in the irradiation with one pulse of pulsed laser can be determined. If the machining diameter coincides with the pixel size of the image data, one pixel of the image data is caused to correspond to one pulse, so that laser machining can be carried out.

Each of the removed portions in the first region and each of the removed portions in the second region may have the same dimensions and shapes or may differ from each other. However, in view of easiness of machining, it is preferable that the removed portions have the same dimension and shape in each region rather than changing the shape and diameter of the laser at the time of laser irradiation for each region.

The machining diameter per pulse can be substantially constant in one-time laser machining (one job), that is, in the laser machining on one surface (the eyeball-side surface in this case) of the spectacle lens. In other words, machining spots having a constant pitch and a constant diameter are used in principle, and the color tone may be varied in accordance with a variation in density, that is, the removed area percentage. A region having a small removed area percentage may be formed by partially not forming machining spots, that is, by increasing a ratio of thinning out the machining spots.

However, since the surface to be machined of the decoration for the eyeball lens is a curved surface obtained by complicated optical calculation, errors may occur in focusing by three-dimensional control during scanning. However, variations in spot size (for example, within ±20%, preferably within ±15%, or within about ±10%) due to errors occurring do not affect the aesthetics of the decoration to be formed.

As a preferred example in the above paragraph, the minimum unit of the removed portions in the first region is one dot-shaped removed portion, and the value of (the minimum width + the maximum width)/2 in each dot-shaped removed portion may be within a variation width of 20% (preferably within 15% or within 10%) in the first region in plan view of the spectacle lens. The reason why the value of (the minimum width + the maximum width)/2 is adopted is a result of considering a case where a final shape obtained in the spectacle lens may be an ellipse even if the laser irradiation is performed such that the irradiation portion has a true circle shape in the design.

In a case where a plurality of dots are connected to constitute the minimum unit of the removed portions, the above provision of (the minimum width + the maximum width)/2 may be adopted for each dot.

The above provision of (the minimum width + the maximum width)/2 may be adopted for 80% or more in number among all the dots in the first region and the second region. The provision is suitably applied to 90% or more, 95% or more, 98% or more, 99% or more, or 100% or more in number, and "80% or more in number" described below in this specification can be replaced with this suitable numerical range in a similar manner.

The above provision of (the minimum width + the maximum width)/2 may be satisfied by 80% or more in number among all the dots in the first region.

The above provision of (the minimum width + the maximum width)/2 may be satisfied by 80% or more in number among all the dots in the second region.

The machining diameter of one pulse can be within a range of 1 µm to 100 µm (or 1 µm to 200 µm), for example. For example, the machining diameter can be within the range of 5 µm to 80 µm, even in the range of 10 µm to 70 µm, or even in the range of 10 µm to 50 µm. Selection of the machining diameter affects a machining speed for decorating the desired design. Furthermore, the pitches in the X direction and the Y direction at which the machining spots corresponding to one pulse are formed can also be within the range of 1 µm to 100 µm. Note that raster scanning or vector scanning may be used as a drawing method. Alternatively, the drawing method is not particularly limited, and for example, a pulse split method or the like may be adopted.

### <Specific Example of Conversion from Image Data to Drawing Data>

Each dot-shaped removed portion may be configured of a pixel as a minimum unit of the image data, or may be configured of a plurality of pixels. The minimum unit of each removed portion formed on the lens surface is a pixel size, and is preferably a size of equal to or less than 200 µm. This dimension is usually hard to be resolved by human eyes. Since alignment of such fine dot-shaped removed portions with the regularity is determined on the basis of predetermined removed area percentages, it is possible to express regions having different color tones in the plurality of regions.

Hereinafter, the image data and the drawing data will be described.

In the manufacturing method of the present embodiment, image data in accordance with a desired design is prepared first. The image data can be binary data. There is no limitation on the format of the image data, and it may be a BMP file, for example. Here, the size of one pixel is determined by the resolution (pixel density) of the image data. In a case of image data having a resolution of 1000 dpi, for example, one pixel corresponds to 25.4 µm. This is the minimum unit in the image data.

The resolution of the image data to be handled is not particularly limited. However, in a case where highly precise decoration is desired for the spectacle lens, 300 dpi or more is preferable. If the resolution exceeds 2000 dpi, definition is further improved, while it is difficult for human eyes to recognize added value.

How the spots are allocated to the resolution of the image can be determined using known image processing software (for example, Illustrator (registered trademark)). In other words, when the drawing data is obtained from the image data, the image processing software may be used to determine the number of pulses (the number of spots connected in the X direction and the number of spots connected in the Y direction), the machining of which is to be made to correspond to one pixel of the image data. At this time, the color tone in a predetermined region can be easily exhibited by regularly aligning dots corresponding to one pixel (by uniformly distributing them in the predetermined region).

### <Setting of Number of Spots per Pixel>

Fig. 13 is an explanatory diagram illustrating a correspondence between one pixel of the image data and machining spots of laser irradiation in the spectacle lens according to the present embodiment.
(a) is a diagram illustrating a state where a 3 × 3 removed portions coupled to each other (the distance between the centers of adjacent removed portions is x0' in both an X and a Y directions) in the XY lattice are set for one pixel.
(b) is a diagram illustrating a state where a 2 × 2 removed portions coupled to each other (the distance between the centers of adjacent removed portions is x0' in both the X direction and the Y direction) in the XY lattice are set for one pixel.
(c) is a diagram illustrating a state where a 2 × 1 removed portions coupled to each other (the distance between the centers of adjacent removed portions is x0", which is smaller than x0') in the XY lattice are set for one pixel.
(d) is a diagram illustrating a state where one removed portion is set for one pixel.

In a case of a machining diameter matching the pixel size of the image data (for example, 25.4 µm in both the X and Y directions), the laser machining can be performed while one pixel of the image data is caused to correspond to one pulse ((d) of Fig. 13).

On the other hand, in a case where one pixel of the image data and the machining diameter of one pulse of the laser are not the same, it is possible to allocate and arrange a plurality of pulses to one pixel, thereby performing the machining. On the basis of the minimum unit of the image data and the minimum unit of the drawing data, the correspondence therebetween is set.

Adjustment is appropriately made, for example, by allocating 2 × 2 spots to one pixel of the image data (Fig. 13(b)) or allocating 3 × 3 spots to one pixel of the image data (Fig. 13(a)).

The numbers of spots in the X direction and the Y direction need not be the same. For example, 2 × 1 spots may be allocated while one pixel is slightly lengthened in the X direction as in Fig. 13(c). In this case, the center-to-center distance of the spots may be set to be small to make a pixel approximate to a square. For example, the center-to-center distance may be set smaller than the center-to-center distance of the spots in the case of v × v spots (v is an integer equal to or greater than 2), as illustrated in Figs. 13(a) and 13(b) (x0'' < x0' in Fig. 13).

### <Setting of Pitches of Adjacent Spots in X and Y Directions (Setting of XY Lattice)>

In allocating spots to one pixel of image data, it is preferable to determine irradiation conditions including the number of spots and arrangement (pitches in the X and Y directions) thereof to be made to correspond to the pixel size of the image data.

When the pitches of the adjacent spots in the X and Y directions are set, it is possible to create drawing data through selection of an optimal combination of the number of spots and the arrangement (the pitches in the X and Y directions) in consideration of an irradiation energy distribution (beam profile) and features and the like of the design to be machined. For example, it may be considered that the machining strength of an overlapped portion of the machining spots changes depending on the irradiation energy distribution of one pulse. Therefore, whether to cause the adjacent machining spots to overlap and an overlapping width in case where the adjacent machining spots are to be caused to overlap may also be determined in accordance with the beam profile at this stage.

The overlapping width (also referred to as an "overlapping degree" in a broad sense) is an important element that affects whether or not the optical interference layer is damaged.

Note that if it is simply considered that there should be no problem if the machining spots are not caused to overlap, it is inevitable to cause the spots to overlap in a case where there is no way other than allocating a plurality of spots to one pixel, which contradicts this idea.

Therefore, one of characteristic parts of the present embodiment is to examine the upper limit of the overlapping degree (in a broad sense, to what extent the overlapping degree does not cause damage) and to determine the minimum value that can be taken as the distance between the centers of the spots.

Also, one of the characteristic parts of the present embodiment is to set a virtual XY lattice on the surface of the spectacle lens on which the removed portions are provided on the basis of the minimum value and arrange spots at the intersections of the XY lattice.

One method of the above content is as follows.

"When directions perpendicular to each other are defined as an X direction and a Y direction, and a combination of straight lines arranged at equal intervals s (the reference symbol s in Fig. 12) in the X direction and straight lines arranged at equal intervals t (the reference symbol t in Fig. 12) in the Y direction is defined as an XY lattice (the vertical lines and the horizontal lines in Fig. 12),
the drawing data is data including at least XY coordinates (Z coordinates may also be included), and
on the basis of a relationship of a degree of damage on lower layer than the high refractive index layers to a total light amount of laser irradiation,
a minimum center-to-center distance x0 between center positions of laser irradiation, which indicates a degree of overlapping of laser irradiation portions in the X direction, is set so as to suppress occurrence of the damage, and the minimum center-to-center distance x0 is set to the equal interval s,
a minimum center-to-center distance y0 between center positions of the laser irradiation, which indicates a degree of overlapping of laser irradiation portions in the Y direction, is set so as to suppress occurrence of the damage, and the minimum center-to-center distance y0 is set to the equal interval t,
a common XY lattice is employed for the first region and the second region, and each of the laser irradiation portions in the first region and each of the laser irradiation portions in the second region are set to include only one intersection of the XY lattice".

"A relationship of a degree of damage on lower layer than the high refractive index layers to a total light amount of laser irradiation" may be obtained in advance before carrying out the method for producing the spectacle lens according to the present embodiment.

Although this relationship is just an example, the relationship may be obtained in the following manner. For example, a Gaussian distribution of a quantity of light is obtained in accordance with the center-to-center distance between adjacent spots. If various conditions for this preliminary test are the same as those used when the method for producing the spectacle lens is actually carried out, except for the center-to-center distance of the spots, more practical test results can be obtained, which is favorable.

The surface of the optical interference layer when the Gaussian distribution is obtained is observed with a microscope or the like to check whether or not the layer has been damaged, and if damaged, the degree of the damage is checked. In this manner, the distance with which the surface is not damaged or an allowable distance even if the surface is damaged is searched for in accordance with the center-to-center distance between the adjacent spots, and a single center-to-center distance is set.

This setting of the center-to-center distance may be performed separately in the X direction (the reference symbol s) and the Y direction (the reference symbol t) as illustrated in Fig. 12 (the distance s ≠ the distance t in Fig. 12), or if it is determined that the center-to-center distances in both directions are to be the same from the beginning, the setting may be performed only in one direction.

Although the fact that the removed portions are preferably arranged in different manners between the first region and the second region has been described above, causing spot arrangement patterns at intersections of the XY lattice to differ from each other can be exemplified as an example using the above XY lattice.

The fact that the pattern configured of the removed portions A can be formed into a stripe shape, a lattice shape, a combination of these, or the like by the dot-shaped removed portions being aligned has been described above. The stripe or the lattice formed by the alignment of the dot-shaped removed portions can be easily produced by using the above virtual XY lattice. At this time, the removed portions can be arranged regularly and can be easily produced regardless of whether it has a stripe shape or a lattice shape, by "setting each of the laser irradiation portions in the first region and each of the laser irradiation portions in the second region so as to include only one intersection of the XY lattice".

For example, each of the removed portions in the first region and each of the removed portions in the second region may include only one intersection of the XY lattice. In terms of a familiar example in Japan, the dot-shaped removed portions may be arranged like go-stones arranged only at intersections of vertical lines and horizontal lines of a goboard.

This means that a process of the manufacturing method performed on the intersections by employing the common XY lattice for both the first region and the second region (for example, Figs. 2 and 12) is reflected to a spectacle lens to be manufactured in a form of a specific configuration. Although the case in which a common XY lattice is not adopted for both of them will not be excluded from the present invention, it is suitable to adopt a common XY lattice for both of them.

The first region can be formed only by determining which intersections are to be irradiated with laser, and a difficulty in fabrication is reduced. This configuration similarly applies to Figs. 1, 3, and 4.

The provision of arranging the spots (removed portions, dot) at the intersections of the XY lattice is preferably satisfied at 80% or more in number of all the dots in the spectacle lens.

To summarize the above content, in the method for producing a spectacle lens according to the present embodiment, it is preferable that the lattice intervals be set on the basis of the technical ideas of
- setting a desired diameter when pulsed laser is used (for example, one value between 20 µm and 25 µm)
- after setting the laser diameter, setting a center-to-center distance between dots such that damage caused by a large quantity of light at the connected portion falls within an allowable range even when the irradiated portions (dots) are connected
- setting lattice intervals on the basis of the center-to-center distance (in turn, setting arrangement of the lattice intersections).

In plan view of the spectacle lens, the removed portions may be thinned out from a virtual state where the removed portions are formed at all the intersections of the XY lattice according to first thinning regularity, and the removed portions in the second region may be thinned out from a virtual state where the removed portions are formed at all the intersections of the XY lattice according to second thinning regularity which is different from the first thinning regularity (for example, x33 → x32, x31 in Fig. 2). More specifically, the removed portions in the first region may be arranged according to the first regularity by thinning out some of the removed portions in the second region. Note that If the center-to-center distance is set near the upper limit of allowable damage, then the lattice spacing is narrowed, the number of intersections of the lattice increases, and the degree of freedom in thinning out some of the removed portions increases (options of intersections where the removed portions are not arranged increases). The first thinning regularity leads to satisfaction of the first regularity related to the arrangement of the removed portions. Similarly, the second thinning regularity leads to satisfaction of the second regularity related to the arrangement of the removed portions.

All the center-to-center distances of the adjacent removed portions in one direction H in the first region are T times the center-to-center distances of the adjacent removed portions in the direction H in the second region (0.9*m/n ≤ T ≤ 1.1*m/n (where m and n are natural numbers)) in plan view of the spectacle lens by setting the XY lattice as described above in advance at the time of the laser irradiation. 0.9 and 1.1 assume variation widths. The above-mentioned one direction H and the one direction G mentioned in regard to the regularity of the center-to-center distances may be the same or different directions. In the case where the directions are different from each other, one of the directions may be the X direction and the other may be the Y direction. In place of 0.9, 0.8 (suitably, 0.95 or 0.99) may be employed, and 1.2 (suitably 1.05 or 1.01) may be employed in place of 1.1.

The provision of the equation described in the above paragraph is a provision that can be satisfied only when the minimum value of the center-to-center distance is adopted as the XY lattice intervals. This is an example in which the region x32 (n = 2 in the equation described in the above paragraph) and the region x33 (m = 3 in the equation described in the above paragraph) in Fig. 2 satisfy the relationship of the above equation.

When the left upper region (1) surrounded by the dashed line in Fig. 12, which will be described later, is defined as the second region, there are a plurality of kinds of center-to-center distances of the dots on the horizontal lines (for example, s and 2s in Fig. 12). When the right region (2) of the left upper region (1) surrounded by the dashed line is defined as the first region, the center-to-center distance is 3s (3s described in Fig. 12). When the center-to-center distance s is used as a reference at this time, the center-to-center distance becomes (3 which is a natural number)/(1 which is a natural number), that is, 3 times, and when the center-to-center distance 2s is used as a reference, the center-to-center distance becomes (3 which is a natural number)/(2 which is a natural number), that is, 1.5 times.

Conversely, when the left upper region (1) surrounded by the dashed lines in Fig. 12, which will be described later, is defined as the first region and the right region (2) of the left upper region (1) surrounded by the dashed lines is defined as the second region, the center-to-center distance s when the center-to-center distance in the second region 3s is used as a reference can be expressed as (1 which is a natural number)/(3 which is a natural number), that is, 1/3 times, and the center-to-center distance 2s can be expressed as (2 which is a natural number)/(3 which is a natural number), that is, 2/3 times.

In a case where the density of the removed portion in the first region is lower than that in the second region, the center-to-center distance in the first region is longer, and m > n. There are no limitations on the values of m and n.

However, the fact that the numerical value n is large means that the number of lattices between the mutually adjacent removed portions in the second region is large, which means that there is a large space between dots in turn. The fact that the numerical value m is large means that the number of lattices between the mutually adjacent removed portions in the first region is large, which means that there is a large space between dots in turn.

Thus, color mixing may be unlikely to be caused in some cases. Therefore, m and n may be any natural numbers not more than 10, for example, as upper limits, and specifically m and n may be equal to or less than 5, or equal to or less than 4, or equal to or less than 3.

Not only the above equations but also the provision related to one direction (for example, the X direction) in this specification can also be applied to a direction (for example, the Y direction) perpendicular to the one direction. It is preferable that this provision be satisfied in both the one direction and the perpendicular direction.

For example, all the center-to-center distances between the adjacent removed portions in a direction H' perpendicular to one direction H in the first region may be T' times (0.9*m'/n' ≤ T' ≤ 1.1*m'/n' (where m' and n' are natural numbers)) of the center-to-center distances between the adjacent removed portions in the direction H' in the second region in plan view of the spectacle lens.

In this manner, the features of one process of the manufacturing method can be reflected in the configuration of the spectacle lens.

In regard to the allocation of the spots to one pixel, it is preferable to adopt the following configuration.

"On the basis of a relationship of the degree of damage on the lower layers than the high refractive index layers to the total light amount of the laser irradiation and
a size of one side of one pixel of the image data,
a number of intersections of the XY lattice arranged in a part corresponding to one pixel in the image data is set in the drawing data."

For example, the number of intersections is set to 9 (3 × 3) in Fig. 13(a), and the number of intersections is set to 4 (2 × 2) in Fig. 13(b).

Note that an XY lattice common to the entire surface of the spectacle lens may be set, or an XY lattice having different lattice intervals for each decorative portion may be set.

### <Details of Laser Machining>

Next, laser machining which is non-heat machining will be described in more detail.

In the present embodiment, as illustrated in Fig. 7, for example, a design pattern can be formed (laser machining) by irradiating the optical interference layer 13 covering the optical surface of the lens substrate 11 with laser light to thereby partially remove at least a part of the low refractive index layers 131 or the high refractive index layers 132 of the optical interference layer 13.

Although the following description will be given by taking as an example a case where the optical interference layer illustrated in Table 1 above is machined, the present invention is not limited thereto. If the laser light transmitted through a SiO₂ layer which is the outermost surface layer reaches an underlying SnO₂ layer, the SnO₂ layer is sublimated or evaporated by irradiation energy, and then at least partially disappears together with the SiO₂ layer on the upper layer side from the irradiated portion. In other words, a predetermined layer including the SiO₂ layer 131a which is the outermost low refractive index layer is partially removed by laser machining using laser light irradiation. At this time, the high refractive index layer on the lower layer side may be exposed in the irradiation portion. Through such a removing process, a design pattern is formed. In a case where the high refractive index layer is exposed, the high refractive index layer is, for example, a ZrO₂ layer 132c.

The SnO₂ layer 132a can be formed in thin thickness (for example, 3 nm to 20 nm, more preferably, from 3 nm to 10 nm). In the present embodiment, the SnO₂ layer 132a is formed to 5 nm.

Note that SnO₂ functions as a reactive layer having high reactivity to laser irradiation. As a material used for the reactive layer, indium tin oxide (ITO) can be used as well as SnO₂.

Although SnO₂ is removed through sublimation or evaporation by laser irradiation, the reactive layer does not have to be completely removed, and a part of the reactive layer may remain on the irradiation portion. For example, the reactive layer may be at least partially removed in the thickness direction of the layer by the laser irradiation.

A phenomenon occurring at the time of the laser irradiation is considered as follows. The reactive layer (such as SnO₂ or ITO) is preferably a conductive layer having a higher electrical conductivity than other layers included in the laminated structure. In a case where the material of the reactive layer has electrical conductivity, the material of the reactive layer has a small bandgap, which is excited by laser irradiation under the conditions as will be described later, and is more likely to absorb energy than SiO₂ and ZrO₂ on the upper layer side (the outermost surface side). Therefore, the reactive layer is likely to most quickly disappear due to sublimation/evaporation in comparison with the other layers. At this time, it is considered that a phenomenon which is so-called multi-photon absorption (for example, two-photon absorption) occurs, which is considered to enable efficient laser machining.

Note that in regard to a concern that ZrO₂ on the lower layer side is damaged due to evaporation, dissolution, or the like by the irradiation energy after SnO₂ disappears, it is possible to substantially remove only the reactive layer and the layers on the upper side thereof, by controlling irradiation conditions to use a delay by a stage of occurrence of such a damage. It has been found that for such fine machining control, selecting ultrashort pulsed laser as will be described later is advantageous.

A laser machining apparatus used for laser machining will now be briefly described.

Fig. 10 is an explanatory diagram illustrating an overview configuration example of the laser machining apparatus used in the method for producing the spectacle lens according to the present embodiment.

As illustrated in Fig. 10, the laser machining apparatus used in the present embodiment includes a laser light source portion 21, an aperture 22, a galvano scanner portion 24, and an optical system 25 and is configured to irradiate the optical interference layer 13 with laser light via these portions 21, 22, 24, and 25.

The laser light source portion 21 is adapted to emit laser light to be used in laser machining and is constituted to emit ultrashort pulsed laser.

The pulse width of the ultrashort pulsed laser in the present embodiment is preferably equal to or greater than 0.01 picoseconds (10 femtoseconds) and equal to or less than 100 picoseconds, is more preferably equal to or greater than 0.01 picoseconds and less than 50 picoseconds, and is further preferably equal to or greater than 0.1 picoseconds and less than 15 picoseconds.

As the wavelength of the ultrashort pulsed laser, it is possible to use a fundamental wavelength of 1064 nm as well as a third harmonic generation (THG) of 355 nm or a second harmonic generation (SHG) of 532 nm, for example. An irradiation beam diameter can be selected in the irradiation in accordance with a desired process design. Although it is effective to reduce a beam diameter in order to machine a fine design with high resolution, a shorter wavelength side is more advantageous in that case. Therefore, 532 nm is preferable and 355 nm is more preferable among the above wavelengths. Alternatively, a forth harmonic generation (FHG) of 266 nm is also suitable.

The pulse energy of the ultrashort pulsed laser is equal to or greater than 0.1 µJ and equal to or less than 30 µJ (about 60 µJ at maximum) at 50 kHz, for example. The beam diameter of the ultrashort pulsed laser is equal to or greater than 10 µm and equal to or less than 30 µm, for example.

The following matters have been found out in regard to laser irradiation conditions.
(1) In a case where the pulse width of the ultrashort pulsed laser is less than 0.1 picoseconds
   Satisfactory machining can be performed at any wavelength of 266 nm to 1064 nm. A shorter wavelength is more advantageous in fine machining. However, a production load becomes greater in terms of maintenance and management and the cost of the apparatus.
(2) In a case where the pulse width of the ultrashort pulsed laser is equal to or greater than 0.1 picoseconds and less than 1 picosecond
   Satisfactory machining can be performed at any wavelength of 266 nm to 1064 nm. A shorter wavelength is more advantageous in fine machining.
(3) In a case where the pulse width of the ultrashort pulsed laser is equal to or greater than 1 picosecond and less than 100 picoseconds
   Satisfactory machining can be performed at any wavelength of 266 nm to 1064 nm. A shorter wavelength is more advantageous in fine machining. This is suitable in terms of maintenance and management, cost, and stability of production conditions of the apparatus.
(4) In a case where the pulse width of the ultrashort pulsed laser is equal to or greater than 100 picoseconds and less than 1 nanosecond
   Depending on the applied wavelength, non-uniformity in machining stability may occur. If 266 nm on the short wavelength side is used as an applied wavelength, for example, the lower layer side may be damaged together with a reaction of SnO₂. Even in the case of 355 nm, it is difficult to achieve uniform machining, and removal machining may reach the layer lower than SnO₂ depending on variations in irradiation conditions.
(5) The pulse width of the ultrashort pulsed laser is equal to or greater than 1 nanosecond

It is difficult to select machining conditions for selectively removing SnO₂ and a layer close to the surface side.

In the above cases (4) and (5), visibility of the machined pattern may be affected. For example, there is a risk of interference of the spectacle lens with the field of view of the wearer.

In order to prevent the inconvenience as described above, it is important that the removal machining using ultrashort pulsed laser be uniform in the processing diameter and the processing depth, and for this purpose, it is considered to be effective to control and use the energy duration by irradiation and the delay of ablation of the underlayer-side material by applying the predetermined ultrashort pulse width.

As long as such ultrashort pulsed laser can be emitted, the specific configuration of the laser light source portion 21 or the combination of the wavelength and the pulse width is not particularly limited.

The laser machining apparatus may further include a beam shaper portion. For example, laser machining with laser light having a uniform energy distribution may be adopted by converting the laser light from the laser light source portion 21 from a Gaussian-type energy distribution to a top-hat-type energy distribution using the beam shaper.

These means change the energy distribution at the irradiation spot. Therefore, it is possible to consider the appropriateness of these means for the selection of the arrangement of the machining diameter and the pitch with respect to the pixels of the image data.

Alternatively, a design pattern may be formed with energy irradiation of a Gaussian distribution applied without using the beam shaper.

On the other hand, the present inventor has further found out that more remarkable effects can be obtained by adding the following contrivances. Specifically, the present inventor has found that the removed portions A can be formed uniformly in a fine pattern with a minimum unit of equal to or less than 200 µm and it is possible to machine a spectacle lens that satisfies the characteristic conditions of the present embodiment. In addition, the present inventor has found that the removed portions A can be stably processed to a smooth surface with a surface roughness Ra of less than 0.0080 µm.

Specific examples of the configuration include configurations satisfying at least any of the following conditions.
- The beam spread angle of the ultrashort pulsed laser is less than 0.300 mrad.
- Mode quality M2 of the ultrashort pulsed laser is equal to or less than 1.1.
- An aperture is applied to a beam from the ultrashort pulsed laser, and the aperture diameter is set to be equal to or less than 80 µm, is set to be equal to or less than 60 µm, or furthermore, is set to be equal to or less than 30 µm, or equal to or less than 25 µm.

The present inventor has found that the optical interference layer of the spectacle lens as an object to be machined can be irradiated with necessary and sufficient energy while the surface uniformity is maintained, by employing the above configuration.

In addition, the spectacle lens is usually configured of a curved surface. Therefore, the depth of focus can have more room than in a case where the top-hat-type distribution is adopted as it is, by adopting the above configuration. This means that, as mentioned above, it is advantageous for stably obtaining smoothness of the region.

The galvano scanner portion 24 moves the irradiation position of the laser light from the laser light source portion 21 two-dimensionally or three-dimensionally to thereby realize the scanning with the laser light, thereby forming a desired design pattern by laser machining. Note that the range in which the galvano scanner portion 24 can perform scanning with the laser light (that is, the maximum laser machining area) is set to a size and a shape which can completely contain the outer shape of the spectacle lens to be machined.

The optical system 25 can be configured of a combination of optical lenses such as telecentric lenses, and mirrors, and is adapted to guide the laser light from the laser light source portion 21 to reach a portion to be machined of the spectacle lenses.

Next, a description will be given of a procedure of laser machining performed using the laser machining apparatus having the configuration as described above.

In the laser machining, a spectacle lens to be machined is set in the laser machining apparatus first. At this time, the spectacle lens is set so that the optical surface of the spectacle lens, more specifically, the surface of the optical interference layer 13 on the optical surface of the spectacle lens becomes the surface to be machined. The optical surface serving as the surface to be machined may be either the object-side surface or the eyeball-side surface, the eyeball-side surface, for example, is assumed to be the surface to be machined here.

After the spectacle lens is set, the laser light source portion 21 and the galvano scanner portion 24 are caused operate on the basis of drawing data created in advance (that is, data for the laser machining created on the basis of image data in accordance with a design to be obtained). As a result, the machined area of the surface to be machined of the spectacle lens is irradiated with the ultrashort pulsed laser so as to form a removal pattern, which is a part of the design configuration.

If the machined area is irradiated with the ultrashort pulsed laser beam, the ultrashort pulsed laser passes through a water-repellent layer 14 on the surface to be machined of the spectacle lens and reaches the optical interference layer 13 on the surface to be machined. Once the ultrashort pulsed laser arrives, the optical interference layer 13 is subjected to the laser machining with the ultrashort pulsed laser.

Ablation machining in the present embodiment is a technique capable of carrying out energy-efficient machining using a multi-photon absorption phenomenon of the ultrashort pulsed laser. More specifically, the ablation machining is removal machining carried out by the portion irradiated with the laser light being instantaneously melted, evaporated, and sublimated, and being caused to fly while minimizing effects of heat at the periphery of the portion to be machined. Since the material with high reactivity is instantaneously removed at the irradiated portion according to such laser machining, it is possible to perform machining while reducing thermal damage (deformation due to heat and the like) with small influences of heat on the periphery of the portion to be machined.

The laser machining according to the present embodiment can be ablation machining as non-heat machining. Such machining can generate a multi-photon absorption process (for example, two-photon absorption process) leading to the multi-photon absorption phenomenon described above. For this reason, efficient and satisfactory machining can be performed on a material which is relatively transparent (with high transmittance) to the laser through the multi-photon absorption. In this case, the applicable range of the laser wavelength is wide, and as the wavelength of the laser light, 355 nm (THG), 532 nm (SHG), or 1064 nm, for example, can be advantageously used.

As described above, picosecond laser and femtosecond laser with a short pulse width are advantageous for inducing the above multi-photon absorption. As specific numerical values, the pulse width can be, for example, less than 100 picoseconds, preferably less than 50 picoseconds, and further preferably less than 1 picosecond (that is, femtosecond). The pulse width is preferably equal to or greater than 10 femtoseconds and less than 100 picoseconds.

Once the laser machining through the irradiation with the ultrashort pulsed laser is performed, the ultrashort pulsed laser passes through SiO₂ in the multilayer structure constituting the optical interference layer 13 and reaches a reactive layer (SnO₂ in the present embodiment) in the optical interference layer 13, and with an instantaneous reaction and sublimating/evaporating of the reactive layer, the SiO₂ layer 131a which is the outermost surface layer is removed. In this manner, only a predetermined layer including the outermost surface layer of the optical interference layer is partially removed in the shape of the laser machined part which is a part of the configuration of the design pattern. Accordingly, the corresponding part of the water-repellent layer 14 is also removed. As a result, a ZrO₂ layer 132b located on the lower layer side of the SnO₂ layer 132a may be exposed at the irradiated portion.

By performing the laser machining as described above, a predetermined layer including the SiO₂ layer 131a, which is the outermost surface layer of the optical interference layer 13, is partially removed, and a design pattern is formed (laser machining) on the surface to be processed of the spectacle lens.

As described above, a portion irradiated with the predetermined laser is partially machined in the surface to be machined.

According to the above method, the removed portions A can be formed in a pattern configured with a size of equal to or less than 200 µm defined as the minimum unit of the machining diameter by designing the image data of the laser machined portion with the size of equal to or less than 200 µm defined as the minimum unit. Therefore, according to the manufacturing method of the present embodiment, the optical interference layer can be irradiated with the ultrashort pulsed laser beam in a predetermined pattern configured with a size of equal to or less than 200 µm defined as a minimum unit, and at least one layer of the multilayer structure can be removed in the pattern. As a result, the color tone of the decorative portion can be changed for each region by adjusting the pattern and the removed area percentage of the decorative portion in the removal, thereby controlling the visibility of the decorative portion.

The drawing data of the laser machined portion may be composed of, for example, dots with the spot diameter of one pulse in the laser machining defined as a minimum unit. In this case, a fine pattern can be formed more precisely. Furthermore, it is easy to form not only the dots but also various letters, symbols, line drawings, and the like as the removed portions A by performing the machining while causing the dots to be formed by laser processing to partially overlap with each other. For example, the removed portions A having a linear shape that has a line width that is equal to the diameter of the dots can be formed by forming a plurality of dots in one direction while causing the dots to partially overlap with each other. Alternatively, it is also possible to form a region constituted only of the removed portions A by causing the removed portions A with the straight line shape that can thus be formed to overlap with each other in the line width direction.

Furthermore, the defining of the minimum unit of the drawing data of the laser machined part as each dot enables the removed area percentage of the pattern formed by regularly aligning dots to be easily adjusted by adjusting intervals between the dots. In other words, it is possible to form a region having a high removed area percentage by further narrowing the intervals between the dots to achieve a pattern with higher density of the dots.

Note that although the case where one pixel of image data and the spot per pulse of the drawing data have the same size has been described above, a region having a desired color tone can be formed through formation of a removal pattern for each pixel even in a case where a plurality of spots are made to correspond to one pixel.

### [Spectacles]

The spectacles according to the present embodiment can also be applied to spectacles including a spectacle frame, and spectacle lenses after lens shaping each having an object-side surface and an eyeball-side surface. It is possible to apply the content described hitherto to spectacles after lens shaping by replacing the "spectacle lens" described hitherto with the "spectacle lens after lens shaping".

The spectacle frame may be of a rimless type or a halfrim type (a spectacle lens after lens shaping which has no rim even at a part of the periphery thereof is included in this type) as well as an ordinary full-rim type.

### [Optical Component]

The spectacle lens according to the present embodiment can also be used as an optical component having a similar configuration. Note that for the optical component, a substrate and an optical interference layer suitable for the application are selected. Examples of the optical component include a protective film for a liquid crystal screen, a window component, a face shield, and a trial lens as a spectacle lens to which a prescription for the wearer has not yet been reflected. Note that the description provided hitherto can be applied to the optical component by replacing the "spectacle lens" described hitherto with the "optical component".

According to the technique of the present embodiment, it is possible to enable not only technical or commercial markings but also a decoration of a desired design such as letters, symbols, illustrations, or the like to be provided to a spectacle lens, and it is also possible to provide a spectacle lens, spectacles, a method for producing a spectacle lens, and the like with decoration of a higher degree of freedom and with richer expression.

### Examples

Hereinafter, examples of the spectacle lens according to the present embodiment will be described. The present invention is not limited to the following examples.

Note that the present invention corresponds to a spectacle lens having a region (50% removed) (for example, a first region) produced in the following test example 2 and another region. Another region described herein is, for example, a variation of the unmachined region in the following test example 1, the solid pattern region in the following test example 3, or the region produced in the following test example 2. To be precise, therefore, each of the following test examples is not an implementation example but a reference example. Each of the following test examples is a test for quantitatively showing that the test example 2 corresponding to the first region has a different color tone from both the unmachined region and the solid pattern region, for example.

An antireflection films (trade name: Venus Guard Coat Lapis RUV) were formed on an object-side surface and an eyeball-side surface of a urethane lens substrate. The antireflection film on the eyeball-side surface was machined through irradiation with ultrashort pulsed laser. As laser conditions, the wavelength was set to 355 nm, the pulse width was set to 12 picoseconds, and the machining diameter of one pulse was set to approximately 20 µm. The dimension of the machined portion was set to 20 mm × 20 mm. In other words, an average reflectance as will be described later and numerical values L*, a*, and b* on the color space were measured in the region of 20 mm × 20 mm.

The spectacle lens having the above antireflection films on which the above machining was not performed was prepared as the test example 1.

As the test example 2, the above machining was carried out on the above region of 20 mm × 20 mm to prepare a spectacle lens with the above antireflection film having a removed area percentage of 50%. As a method of realizing the removed area percentage of 50%, the above XY lattice was virtualized and spots (three spots in the X direction and two spots in the Y direction) (intersections of the XY lattice) were allocated to one pixel. Then, the coupled bodies of these spots were aligned at intervals corresponding to one intersection in the X direction and at intervals corresponding to two intersections in the Y direction.

As the test example 3, a spectacle lens having the above antireflection film on which a solid pattern with zero nonmachined portion was formed was prepared.

The average reflectance and the numerical values on the color space in each test example are shown in the following table. Plots of the average reflectance (vertical axis: average reflectance (%), the horizontal axis: wavelength (nm)) in the test examples are shown in Fig. 14.

**[Table 2]**

| | Average Reflectance (%) | L* | a* | b* |
|---|---|---|---|---|
| Test Example 1 | 3.0750 | 15.5680 | 8.8001 | -27.5366 |
| Test Example 2 | 7.6470 | 32.5205 | 4.3152 | -3.3102 |
| Test Example 3 | 11.5320 | 40.5421 | 3.7969 | 3.9735 |

From the above table, a change in hue due to the machining of the present invention was confirmed.

First, it is found in comparison between the test examples 2 and 3 (50% machined and 100% machined) and the test example 1 (unmachined) that the lightness index L* increases and the lightness increases.

In the test example 2 (50% machined), the a* value of the color coordinate decreased and the b* value of the color coordinate remarkably increased as compared with the test example 1 (unmachined). It is possible to ascertain from this that redness decreased, bluish color decreased, and yellowish color increased in the test example 2 (50% machined) as compared with those in the test example 1 (unmachined). It is also possible to ascertain from changes in absolute values of a* and b* that saturation decreased. This indicates that the color tone γ produced by the test example 2 (50% machined) differed from both the color tone α produced by the test example 3 (100% machined) and the color tone β produced by the test example 1 (unmachined).

### Reference Signs List

- 1: Spectacle lens
- 2: Spectacle frame shape line
- 11: Lens substrate
- 12: Hard coat layer
- 13: Optical interference layer
- 14: Water-repellent layer
- 21: Laser light source portion
- 22: Aperture
- 24: Galvano scanner portion
- 25: Optical system
- 131: Low refractive index layer
- 132: High refractive index layer
- A: Removed portion
- B: Non-removed portion
- x1, x2, x31, x32, x33: Region
- X1, X2, X3: Decorative portion

## Claims

1. A spectacle lens that has an object-side surface and an eyeball-side surface, the spectacle lens comprising:
a lens substrate; and
an optical interference layer having a laminated structure, the optical interference layer being provided on at least any surface of the lens substrate,
wherein
at least any one of surfaces of the spectacle lens on which the optical interference layer is provided includes
a first region where removed portions from which at least one layer of the optical interference layer has been locally removed are arranged with first regularity, with non-removed portions in which the layer has not been removed located between the removed portions, and
a second region that is a region where the removed portions are arranged with second regularity or a region configured of the non-removed portions, and
the first region and the second region are visually recognized as regions having mutually different color tones.

2. The spectacle lens according to claim 1, wherein the color tones include at least any of brightness/darkness of colors, color densities, brightness/darkness according to a difference in amount of reflected light, and intensity of how to shine generated in the regions.

3. The spectacle lens according to claim 2, wherein
there is a single color tone in the first region, and
there is a single color tone in the second region.

4. The spectacle lens according to claim 1, wherein
the optical interference layer having the laminated structure is an antireflection film having a multilayer structure in which low refractive index layers and high refractive index layers are laminated, and
the removed portions are formed by partially removing the low refractive index layer that is an outermost layer of the multilayer structure.

5. The spectacle lens according to claim 1, comprising:
the first region; and
a second region in which the removed portions are arranged with second regularity,
in which
arrangement modes of the removed portions differ between the first region and the second region.

6. The spectacle lens according to claim 1, wherein the first regularity is a mode in which the removed portions are repeatedly arranged in at least one direction.

7. The spectacle lens according to claim 6, wherein in a plan view of the spectacle lens, a minimum unit of repetition of the removed portions in the first region is one dot-like removed portion, and in 80 % or more in the number of dots in the first region, a value of (a minimum width + a maximum width)/2 in each dot-like removed portion is within a variation width of 20% in the first region.

8. The spectacle lens according to claim 6, wherein in a plan view of the spectacle lens, a minimum unit of repetition of the removed portions in the first region is a plurality of interconnected dot-like removed portions.

9. The spectacle lens according to claim 1, wherein the non-removed portions in the first region surround each of the removed portions or are surrounded by the removed portions, or a combination thereof is adopted.

10. The spectacle lens according to claim 5, wherein
when directions perpendicular to each other in a plan view of the spectacle lens are defined as an X direction and a Y direction, and a combination of straight lines arranged at equal intervals in the X direction and straight lines arranged at equal intervals in the Y direction is defined as an XY lattice,
a common XY lattice is employed in the first region and the second region, and each of the removed portions in the first region and each of the removed portions in the second region include only one intersection of the XY lattice.

11. The spectacle lens according to claim 10, wherein
in a plan view of the spectacle lens,
the removed portions in the first region are obtained by thinning out removed portions in a virtual state where the removed portions are formed at all intersections of the XY lattice according to first thinning regularity, and
the removed portions in the second region are obtained by thinning out removed portions in a virtual state where the removed portions are formed at all intersections of the XY lattice according to second thinning regularity which is different from the first thinning regularity.

12. The spectacle lens according to claim 5, wherein
the first regularity includes a rule of a distance between centers of the removed portions in one direction G in the first region, and
the second regularity includes a rule of a distance between centers of the removed portions in the one direction G in the second region.

13. The spectacle lens according to claim 5, wherein
in a plan view of the spectacle lens, all distances between the centers of adjacent removed portions in one direction H in the first region are T times distances between the centers of adjacent removed portions in the direction H in the second region, and $0.9 * m / n \leq T \leq 1.1 * m / n$ (where m and n are natural numbers).

14. The spectacle lens according to claim 5, wherein the second region includes only the removed portions.

15. The spectacle lens according to claim 5, wherein luminous transmittances of both the first region and the second region are equal to or greater than 80%.

16. The spectacle lens according to claim 1, wherein a maximum width of the removed portions is equal to or less than 200 µm.

17. Spectacles comprising:
a spectacle frame; and spectacle lenses after lens shaping each having an object-side surface and an eyeball-side surface;
wherein each of the spectacle lenses is the spectacle lens according to any one of claims 1 to 16.

18. A method for producing a spectacle lens including an object-side surface and an eyeball-side surface, the method comprising:
forming, on at least any of surfaces provided with an optical interference layer in the spectacle lens including a lens substrate and the optical interference layer provided on at least any of surfaces of the lens substrate and having a laminated structure,
a first region where removed portions obtained by locally removing at least one layer of the optical interference layer through laser irradiation are arranged with first regularity with non-removed portions in which the one layer has not been removed located between the removed portions, and
a second region that is a region where the removed portions are arranged with second regularity through laser irradiation or a region that is configured of the non-removed portions,
wherein
the first region and the second region are visually recognized as regions with mutually different color tones.

19. The method for producing a spectacle lens according to claim 18, comprising:
generating, from image data of a desired decorative design, drawing data including a portion scheduled to be irradiated with laser on the surface provided with the optical interference layer; and
irradiating the optical interference layer with laser while scanning the drawing data with a laser beam by a laser irradiation device to form the removed portions,
wherein
the optical interference layer having the laminated structure is an antireflection film having a multilayer structure in which low refractive index layers and high refractive index layers are laminated, and
the removed portions are obtained by partially removing the low refractive index layer that is an outermost layer of the multilayer structure.

20. The method for producing a spectacle lens according to claim 19, comprising:
forming the first region, and
a second region where the removed portions are arranged with second regularity through laser irradiation,
wherein
arrangement modes of the removed portions differ between the first region and the second region.

21. The method for producing a spectacle lens according to claim 20, wherein
when directions perpendicular to each other are defined as an X direction and a Y direction, and a combination of straight lines arranged at equal intervals s in the X direction and straight lines arranged at equal intervals t in the Y direction is defined as an XY lattice,
the drawing data is data including at least XY coordinates, and
on the basis of a relationship of a degree of damage on lower layer than the high refractive index layers to a total light amount of laser irradiation,
a minimum center-to-center distance x0 between center positions of laser irradiation, which indicates a degree of overlapping of laser irradiation portions in the X direction, is set so as to suppress occurrence of the damage, and the minimum center-to-center distance x0 is set to the equal interval s,
a minimum center-to-center distance y0 between center positions of the laser irradiation, which indicates a degree of overlapping of laser irradiation portions in the Y direction, is set so as to suppress occurrence of the damage, and the minimum center-to-center distance y0 is set to the equal interval t,
a common XY lattice is employed for the first region and the second region, and
each of the laser irradiation portions in the first region and each of the laser irradiation portions in the second region are set so as to include only one intersection of the XY lattice.

22. The method for producing a spectacle lens according to claim 21, wherein
on the basis of a relationship of the degree of damage on the lower layers than the high refractive index layers to the total light amount of the laser irradiation and
a size of one side of one pixel of the image data,
a number of intersections of the XY lattice arranged in a part corresponding to one pixel of the image data is set in the drawing data.

23. The method for producing a spectacle lens according to claim 21, wherein
laser irradiation portions in the first region are arranged in a mode in which the irradiation portions in a virtual state where all intersections of the XY lattice are irradiated with laser are thinned out according to first thinning regularity, and
the laser irradiation portions in the second region are arranged in a mode in which the laser irradiation portions in the virtual state where all the intersections of the XY lattice are irradiated with laser are thinned out according to second thinning regularity which is different from the first thinning regularity.

24. The method for producing a spectacle lens according to claim 20, wherein a variation width of a value of (a minimum width + a maximum width)/2 at each of the laser irradiation portions in the first region and the second region is within 20%.

25. The method for producing a spectacle lens according to claim 19, wherein the drawing data causes one machining spot of laser irradiation to correspond to one pixel of the image data.

26. The method for producing a spectacle lens according to claim 19, wherein the drawing data causes a plurality of machining spots of laser irradiation to correspond to one pixel of the image data.

27. The method for producing a spectacle lens according to claim 19, wherein the drawing data causes a plurality of machining spots of laser irradiation to correspond to one pixel of the image data in a mutually partially overlapping manner.

28. The method for producing a spectacle lens according to claim 19, wherein the laser is an ultrashort pulsed laser having a pulse width of equal to or greater than 10 femtoseconds to less than 100 picoseconds.

29. An optical component including:
a substrate; and
an optical interference layer provided on a surface of the substrate and having a laminated structure,
wherein
the surface of the optical component provided with the optical interference layer includes
a first region where removed portions from which at least one layer of the optical interference layer has been locally removed are arranged with first regularity, with non-removed portions in which the layer has not been removed located between the removed portions, and
a second region that is a region where the removed portions are arranged with second regularity or a region configured of the non-removed portions, and
the first region and the second region are visually recognized as regions having mutually different color tones.
